# EUROPEAN PATENT APPLICATION

(11) **EP 4 765 932 A1**
(43) Date of publication of application: **24.06.2026**
(21) Application number: 23949334.9
(22) Date of filing: 18.08.2023
(51) Int. Cl.: H04W 24/08

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Mewburn Ellis LLP
(86) International application number: PCT/CN2023/113903
(87) International publication number: WO 2025/039140

(57) **Abstract**

A communication method, a device, a computer-readable storage medium, a computer program product, and a computer program are provided in the disclosure. The method includes a first functional entity sending information related to a first sensing task, where the first sensing task is related to multiple first sensing sessions.

## Description

### TECHNICAL FIELD

This application relates to the field of communication, and particularly, to a communication method, a device, a computer-readable storage medium, a computer program product, and a computer program.

### BACKGROUND

In related art, communication networks, for example, cellular networks, are mainly used for communication. However, the wireless electromagnetic wave signals used in cellular networks can not only be used for wireless data transmission and communication, but also be capable of environmental sensing, such as recognition of user actions or gestures, respiratory monitoring, terminal mobile speed measurement, environmental imaging, weather monitoring, etc. Therefore, cellular networks are not only for communication and data transmission, but can also for sensing information acquisition. Sensing service consumes significant spectrum resources and data transmission resources, and how to save resources and support more sensing service become a problem to be solved.

### SUMMARY

A communication method, a device, a computer-readable storage medium, a computer program product, and a computer program are provided in embodiments of the disclosure.

A communication method is provided in embodiments of the disclosure. The communication method includes the following. A first functional entity sends information of a first sensing task. The first sensing task is related to multiple first sensing sessions.

A communication method is provided in embodiments of the disclosure. The communication method the following. The second functional entity sends information of a second sensing session. The second sensing session is related to multiple first sensing requests.

A communication method is provided in embodiments of the disclosure. The communication method includes the following. A sensing device receives information of a first sensing task. The first sensing task is related to multiple first sensing sessions.

A first functional entity is provided in embodiments of the disclosure. The first functional entity includes a first communication unit. The first communication unit is configured to send information of a first sensing task. The first sensing task is related to multiple first sensing sessions.

A second functional entity is provided in embodiments of the disclosure. The second functional entity includes a second communication entity. The second communication entity is configured to send information of a second sensing session. The second sensing session is related to multiple first sensing requests.

A sensing device is provided in embodiments of the disclosure. The sensing device includes a third communication unit. The third communication unit is configured to receive information of a first sensing task. The first sensing task is related to multiple first sensing sessions.

A first functional entity is provided in embodiments of the disclosure. The first functional entity includes a transceiver, a processor, and a memory. The memory is configured to store computer programs. The transceiver is configured to communicate with other devices. The processor is configured to invoke and execute computer programs stored in the memory, to cause the first functional entity to perform the aforementioned method.

A second functional entity is provided in embodiments of the disclosure. The second functional entity includes a transceiver, a processor, and a memory. The memory is configured to store computer programs. The transceiver is configured to communicate with other devices. The processor is configured to invoke and execute computer programs stored in the memory, to cause the second functional entity to perform the aforementioned method.

A sensing device is provided in embodiments of the disclosure. The sensing device includes a transceiver, a processor, and a memory. The memory is configured to store computer programs. The transceiver is configured to communicate with other devices. The processor is configured to invoke and execute computer programs stored in the memory, to cause the sensing device to perform the aforementioned method.

A chip is provided in embodiments of the disclosure to perform the aforementioned method. Specifically, the chip includes a processor. The processor is configured to invoke and execute computer programs stored in a memory, to cause a device equipped with the chip to perform the aforementioned method.

A computer-readable storage medium is provided in embodiments of the disclosure. The computer-readable storage medium is configured to store computer programs. The computer programs, when executed by a computer, are operable with the computer to perform the aforementioned method.

A computer program product is provided in embodiments of the disclosure. The computer program product includes computer program instructions. The computer program instructions are operable with a computer to perform the aforementioned method.

A computer program is provided in embodiments of the disclosure. The computer program, when executed by a computer, is operable with the computer to perform the aforementioned method.

By adopting the solution provided in embodiments, the first functional entity sends a first sensing task related to multiple first sensing sessions, enabling the sensing device to simultaneously measure to obtain a measurement result that can be used by multiple first sensing sessions. In this way, a problem of resource waste caused by issuing a sensing task for each sensing session and performing a measurement for each sensing session, can be avoided, and more sensing service can be supported while saving resources.

### BRIEF DESCRIPTION OF THE DRAWINGS

FIG. 1 is a schematic diagram of an application scenario according to embodiments of the disclosure.
FIG. 2 is a schematic architectural diagram of a 5th-generation (5G) network system.
FIG. 3 is a schematic architectural diagram of an integrated sensing and communication (ISAC) system.
FIG. 4 is a schematic flowchart of a communication method according to an embodiment of the disclosure.
FIG. 5 is a schematic flowchart of a communication method according to another embodiment of the disclosure.
FIG. 6 is a schematic flowchart of a communication method according to yet another embodiment of the disclosure.
FIG. 7 is a schematic flowchart of a communication method according to an embodiment of the disclosure.
FIG. 8 is a schematic block diagram of a first functional entity according to an embodiment of the disclosure.
FIG. 9 is a schematic block diagram of a second functional entity according to an embodiment of the disclosure.
FIG. 10 is a schematic block diagram of a sensing device according to an embodiment of the disclosure.
FIG. 11 is a schematic block diagram of a communication device according to embodiments of the disclosure.
FIG. 12 is a schematic block diagram of a chip according to embodiments of the disclosure.
FIG. 13 is a schematic block diagram of a communication system according to embodiments of the disclosure.

### DETAILED DESCRIPTION

Technical solutions of embodiments of the disclosure will be described in the following with reference to accompanying drawings in embodiments of the disclosure.

The technical solutions of embodiments of the disclosure are applicable to various communication systems, for example, a long term evolution (LTE) system, an advanced long term evolution (LTE-A) system, a new radio (NR) system, an evolved NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems, etc.

Generally, a traditional communication system supports a limited quantity of connections and therefore is easy to implement. However, with the development of communication technology, a mobile communication system will not only support traditional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the disclosure can also be applied to these communication systems. In a possible implementation, the communication system in embodiments of the disclosure can be applied to a carrier aggregation (CA) scenario, a dual connectivity (DC) scenario, or a standalone (SA) network deployment scenario. In a possible implementation, the communication system in embodiments of the disclosure is applicable to an unlicensed spectrum, where the unlicensed spectrum can also be regarded as a shared spectrum. Or the communication system in embodiments of the disclosure is applicable to a licensed spectrum, where the licensed spectrum can be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc. The terminal device can be a station (ST) in a WLAN, a cellular telephone, a cordless telephone, a session initiation protocol (SIP) telephone, a wireless local loop (WLL) station, a personal digital assistant (PDA) equipment, a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc. In embodiments of the disclosure, the terminal device can be deployed on land, which includes indoor or outdoor, handheld, wearable, or in-vehicle; the terminal device can also be deployed on water (such as ships, etc.); the terminal device can also be deployed in the air (such as airplanes, balloons, satellites, etc.). In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc. By way of explanation rather than limitation, in embodiments of the disclosure, the terminal device can also be a wearable device. The wearable device can also be referred to as a wearable smart device, which is a generic term of wearable devices obtained through intellectualized design and development on daily wearing products with wearable technology, for example, glasses, gloves, watches, clothes, accessories, and shoes. The wearable device is a portable device that can be directly worn or integrated into clothes or accessories of a user. More than being a hardware device, the wearable device can also realize various functions through software support, data interaction, and cloud interaction. A wearable smart device in a broad sense includes: device with complete functions and large sizes and is capable of realizing all or part of functions independently without a smart phone, such as a smart watch or smart glasses, etc.; and, device that is dedicated to a specific type of application function and required to be used together with other devices such as a smart phone, such as various types of smart bands and smart jewelries for physical monitoring, etc.

In embodiments of the disclosure, the network device can be a device configured to communicate with a mobile device, and the network device can be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc. By way of explanation rather than limitation, in embodiments of the disclosure, the network device can be mobile. For example, the network device can be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device can also be a base station deployed on land or water. In embodiments of the disclosure, the network device serves a cell, and the terminal device communicates with the network device via a transmission resource (for example, a frequency-domain resource or a spectrum resource) used by the cell. The cell may be a cell corresponding to the network device (for example, a base station). The cell may belong to a macro base station, or can belong to a base station corresponding to a small cell. The small cell may include: a metro cell, a micro cell, a pico cell, a femto cell, etc. These small cells are characterized by small coverage and low transmitting power and are adapted to provide data transmission service with high-rate.

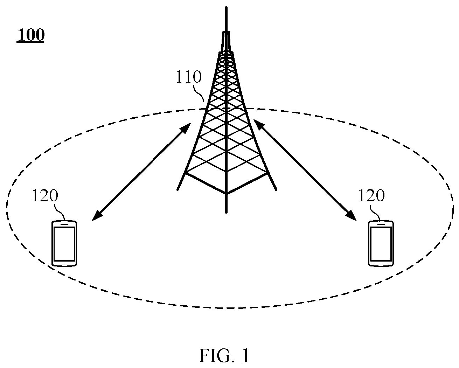

FIG. 1 exemplarily illustrates a communication system 100. The communication system includes one network device 110 and two terminal devices 120. In a possible implementation, the communication system 100 can include multiple network devices 110, and there can be other numbers of terminal devices 120 within the coverage range of each network device 110, which is not limited in embodiments of the disclosure. In a possible implementation, the communication system 100 can further include other network entities such as a mobility management entity (MME) or an access and mobility management function (AMF), which is not limited in embodiments of the disclosure. The network device can further include an access network (AN) device and a core network device. That is, the wireless communication system can further include multiple core networks for communicating with the AN device. The AN device can be an evolved Node B (eNB or e-NodeB), a macro base station, a micro base station (also referred to as a "small base station"), a pico base station, an access point (AP), a transmission point (TP), or a new generation Node B (gNodeB) in an LTE system, a next generation NR system, or an authorized auxiliary access long-term evolution (LAA-LTE) system. It can be understood that a device with communication functions in the network/system in embodiments of the disclosure may be referred to as a communication device. Taking the communication system illustrated in FIG. 1 as an example, the communication device can include a network device and a terminal device with communication functions. The network device and terminal device can be specific devices in embodiments of the disclosure, and will not be elaborated herein. The communication devices can also include other devices in the communication system, such as a network controller, an MME, or other network entities, etc., which is not limited in embodiments of the disclosure.

To facilitate understanding of embodiments of the disclosure, basic processes and basic concepts involved in embodiments of the disclosure will be briefly described in the following. It can be understood that the basic processes and basic concepts described in the following do not limit embodiments of the disclosure.

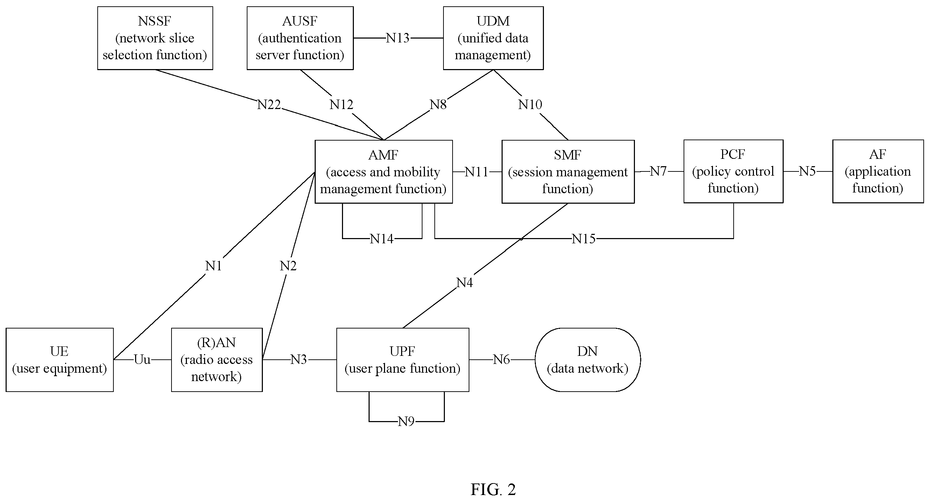

As illustrated in FIG. 2, a schematic architectural diagram of a 5G network system includes the following. A network slice selection function (NSSF) mainly used for management of network-slice related information, such as selecting a network slice for a terminal device. An authentication server function (AUSF) used for security authentication for user access. A unified data management (UDM) used for management and storage of subscription and authentication data. An access and mobility management function (AMF) used for mobility management, management of security anchor and security UE policy, etc. In addition to performing mobility management for the UE, the AMF is also responsible for forwarding session management-related messages between the UE and SMF. A session management function (SMF) used for session management, UE internet protocol (IP) address allocation and management, etc. A policy control function (PCF) responsible for providing policies related to mobility management, session management, and charging for the UE, etc. An application function (AF) used for external application servers. A user plane function (UPF) used for complex user plane processing, such as forwarding traffic between the radio access network (RAN) and the internet, reporting traffic usage, implementing quality of service (QoS) policies, etc. A data network (DN), that is, an external data network of 5G core network (5GC), such as the internet, etc. Data transmission occurs through corresponding interfaces between various nodes of the 5GC, between the UE and the nodes of the 5GC, between the UE and the RAN, and between the RAN and the nodes of the 5GC. For example, as illustrated in FIG. 2, the AMF in the 5GC performs data transmission with the NSSF through an N22 interface; the AMF performs data transmission with the SMF through an N11 interface; the AMF performs data transmission with the AUSF through an N12 interface; and the AMF performs data transmission with the UDM through an N8 interface. The SMF performs data transmission with the UPF through an N4 interface. The UPF performs data transmission with an external data network through an N6 interface, and the UPF performs data transmission with an access network (AN) through an N3 interface. The UE establishes an access stratum connection with the AN through a Uu interface, to exchange access stratum messages and perform wireless data transmission. The UE establishes a none access stratum (NAS) connection with the AMF through an N1 interface, to exchange NAS messages. The RAN performs data transmission with the AMF through an N2 interface, and the RAN performs data transmission with the UPF through an N3 interface. It can be understood that the above only describes some of the interfaces between some of the nodes, and other interfaces between other nodes of the 5GC illustrated in FIG. 2 will not be elaborated herein.

Current cellular networks, including the 5G networks, are mainly used for communication. However, the wireless electromagnetic wave signals used in cellular networks can not only be used for wireless data transmission and communication, but also be capable of environmental sensing, such as recognition of user actions or gestures, respiratory monitoring, terminal mobile speed measurement, environmental imaging, weather monitoring, etc. Therefore, future cellular networks are not only for communication and data transmission, but can also for sensing information acquisition.

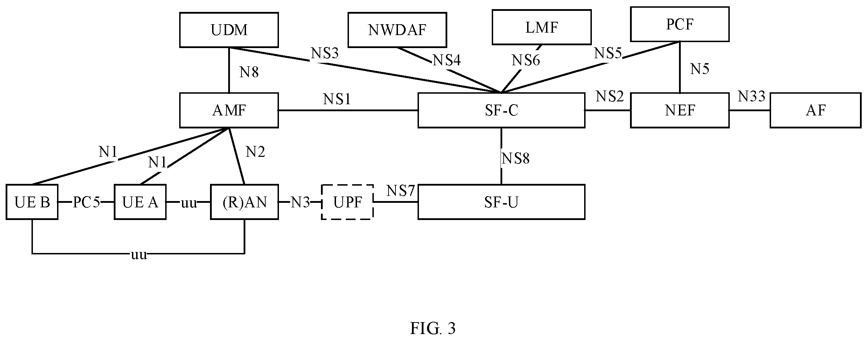

Currently, discussions are underway regarding supporting sensing capability in a beyond 5G (B5G) network. By introducing a sensing function (SF) and corresponding processes, sensing capability can be supported in the 3rd generation partnership project (3GPP) network. FIG. 3 illustrates a flow chart of a possible UE-level sensing performed by controlling AN devices or UEs. When an application sends a sensing request for a target UE to the core network of the 3GPP network, the core network (such as a network exposure function (NEF) or a gateway mobile location center (GMLC)) selects appropriate AN device or auxiliary UE via SF (such as a sensing function-control (SF-C) and a sensing function-user (SF-U) illustrated in FIG. 3) or AMF, and triggers sensing-related wireless measurement capability, to activate sensing information measurement and generate sensing result. In addition, FIG. 3 also illustrates interfaces between the SF-C and other core network elements or interfaces between the SF-U and other core network elements. For example, an interface between the SF-C and the AMF is NS1, and an interface between the SF-C and the NEF is NS2, etc., which will not be elaborated herein. It can also be noted with reference to FIG. 3 that, the SF-C can extract relevant data from at least one type of network element, such as a network data analytics function (NWDAF), a UDM, a location management function (LMF), etc.

Examples for major wireless sensing senarios of an integrated sensing and communication (ISAC) are as follows. 1) gNB monostatic sensing: a base station sends a sensing signal and receives an echo signal. 2) gNB-gNB bistatic sensing: base station B receives a sensing signal sent by base station A. 3) UE-gNB uplink bistatic sensing: a base station receives a sensing signal sent by a terminal. 4) UE-gNB downlink bistatic sensing: a terminal receives a sensing signal sent by a base station. 5) UE monostatic sensing: a terminal sends a sensing signal and receives an echo signal. 6) UE-UE bistatic sensing: terminal B receives a sensing signal sent by terminal A.

In an initial stage of ISAC of B5G, it is feasible to reuse existing air interface signals for sensing as far as possible without introducing overmuch air interface enhancements. Furthermore, in view of the complexity of full-duplex implementation, sensing between the terminal and/or the base station is prioritized. For sensing methods decribed in 3), 4), 5), and 6), the UE may need to report a large amount of sensing data to a SF of the core network, or to obtain auxiliary data from a core network element.

Currently, considering that the amount of interactive data between the UE and the SF is relatively large, the UE can perform necessary interaction for sensing service with the SF through user plane data transmission.

Specifically, requirement parameters of the sensing service includes those given in the following table.

| | | | | | | | | | | | | |
|---|---|---|---|---|---|---|---|---|---|---|---|---|
| Scenario | Sensing Service Area | Confi dence Level [%] | Accuracy of Positioning Estimate by Sensing (For a Target Confidence Level) | | Accuracy of Velocity Estimate by Sensing (For a Target Confidence Level) | | Sensing Resolution | | Max Sensing Service Latency [ms] | Refre shing Rate [s] | Missed Detection [%] | False Alarm [%] |
| | | | Horizontal [m] | Vertical [m] | Horizontal [m/s] | Vertical [m/s] | Range Resolution [m] | Velocity Resolution Horizonta l/ Vertical) [m/s x m/s] | | | | |

The requirement parameters can include a sensing scenario (such as intrusion detection, respiratory monitoring, motion capture, autonomous driving, etc.), a sensing area (that is, a sensing region) (such as indoor or outdoor, an area size of a region, etc.), a confidence level (reliability of a sensing result), an accuracy of positioning estimate (including a horizontal positioning accuracy and a vertical positioning accuracy, in a unit such as meter/decimeter/centimeter, etc.), an accuracy of velocity estimate (including a horizontal velocity accuracy and a vertical velocity accuracy), a sensing resolution (such as a range resolution and a velocity resolution, etc.), a maximum sensing service latency, a refresh rate (such as refreshing 10 times per second, etc.), a missed detection rate, and a false alarm rate, etc.

However, current sensing service consumes significant spectrum resources and data transmission resources, and there are various types of sensing service. If each sensing service is performed seperately, only a small amount of sensing requirements can be supported. But in reality, sensing results required for the same or similar sensing scenarios may be similar. If multiple sensing task and sensing requests can be aggregated, the same resources can be reused to complete multiple sensing tasks simultaneously, which can save resources and support more sensing tasks.

It can be understood that the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, or *B* alone. In addition, the character "/" herein generally indicates that the associated objects are in an "or" relationship. It can be understood that the term "indication" referred to in the embodiments of the disclosure can be a direct indication, an indirect indication, or that there is an association relationship. For example, *A* indicates *B* may mean that *A* directly indicates *B* (e.g., *B* can be obtained according to *A*), may mean that *A* indirectly indicates *B* (e.g., *A* indicates *C*, and *B* can be obtained according to C), or may mean that there is an association relationship between A and *B.* In the elaboration of embodiments of the disclosure, the term "corresponding" may mean that there is a direct or indirect correspondence between the two, may mean that there is an association between the two, or may mean a relationship of indicating and being indicated or configuring and being configured, etc.

To facilitate understanding of technical solutions of embodiments of the disclosure, the related art of embodiments of the disclosure will be described in the following. The following related art, as optional solutions, can be combined with the technical solutions of embodiments of the disclosure, and shall all be covered within the protection scope of embodiments of the disclosure.

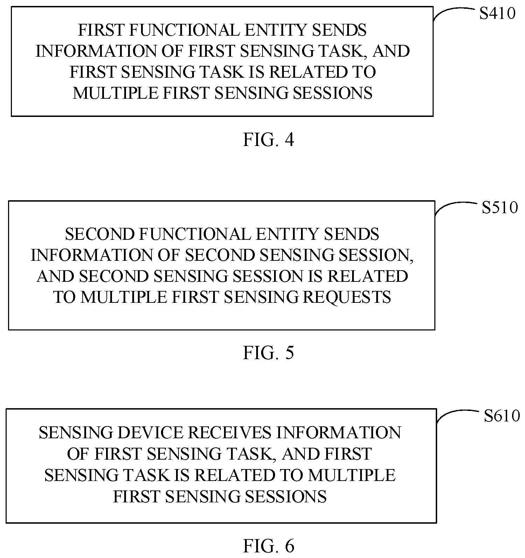

FIG. 4 is a schematic flowchart of a communication method according to an embodiment of the disclosure. The method includes at least some of the following contents.

S410. A first functional entity sends information of a first sensing task. The first sensing task is related to multiple first sensing sessions.

FIG. 5 is a schematic flowchart of a communication method according to another embodiment of the disclosure. The method includes at least some of the following contents.

S510. A second functional entity sends information of a second sensing session. The second sensing session is related to multiple first sensing requests.

FIG. 6 is a schematic flowchart of a communication method according to yet another embodiment of the disclosure. The method includes at least some of the following contents.

S610. A sensing device receives information of a first sensing task. The first sensing task is related to multiple first sensing sessions.

Herein, the first functional entity is deployed in a sensing function (SF), which refers to a network element capable of performing sensing-related processing, and/or providing sensing-related services, and/or supporting sensing-related capability. In some possible examples, the sensing function may be referred to as SF. The SF may include a sensing function-user (SF-U) and/or a sensing function-control (SF-C). Or, the SF may be one entity that is not divided into the SF-U and the SF-C.

The second functional entity is deployed in at least one of: an access and mobility management function (AMF), a network exposure function (NEF), a gateway mobile location center (GMLC), and the SF.

In some possible examples, the first functional entity and the second functional entity are deployed in different functional entities ("function" for short). For instance, the first functional entity is deployed in the SF, and the second functional entity is deployed in at least one of the AMF, the NEF, and the GMLC. In this case, information transmitted between the first functional entity and the second functional entity, may refer to information transmitted between different devices (or different network elements).

In some possible examples, the first functional entity and the second functional entity are deployed in the same functional entity ("function" for short). For instance, both the first functional entity and the second functional entity are deployed in the SF. In this case, information transmitted between the first functional entity and the second functional entity, may refer to information transmitted between different functional modules or functional units within the SF. A method for information transmission between different functional modules or different functional units within the SF, is not limited in embodiments.

The sensing device may include at least one of: a terminal, and an access network (AN) device. In some possible examples, the sensing device may also be referred to as a sensing node, and possible names of the sensing device will not be enumerated or limited herein.

A sensing session in embodiments refers to a sensing session configured for the first functional entity (such as the SF), to request for a specific sensing result. A sensing task in embodiments refers to a sensing task configured for the sensing device (or the sensing node), for (or to control or request) the sensing device to perform at least one of sending and receiving of sensing signal, data measurement, data collection, data estimation, etc.

In some possible implementations, a second functional entity receives one or more second sensing requests within a period of time (such as a first time period). Then, the second functional entity aggregates one or more second sensing requests of the same type at one time, to obtain one or more first sensing requests with the same type parameter. Then, a corresponding second sensing session is generated based on the one or more first sensing requests with the same type parameter. In this implementation, the second functional entity may obtain one or more second sensing sessions at once. Any one of the second sensing sessions relates to one or more first sensing requests, different second sensing sessions relate to different first sensing requests, and different second sensing sessions correspond to different type parameters. Scenarios corresponding to this implementation are described in detail in the following.

Before the second functional entity sends information of the second sensing session, the method may further include the following. The second functional entity receives information of each second sensing request in one or more second sensing requests. When the second functional entity determines, based on the information of each second sensing request, that one or more second sensing requests with the same type parameter exist in one or more second sensing requests, the second functional entity determines the one or more first sensing requests based on the one or more second sensing requests with the same type parameter.

Herein, the second functional entity receives information of each second sensing request in the one or more second sensing requests as follows. The second functional entity receives, within the first time period, the information of each second sensing request in the one or more second sensing requests from a first network function (NF).

The first NF may have a capability of initiating one or more sensing requests. A method for generating any one of the sensing requests by the first NF is not limited in embodiments. Exemplorily, the first NF may be at least one of: an application function (AF), a terminal initiating sensing or a sensing request. In some possible examples, the first NF may be referred to as a consumer NF. Other possible names of the first NF will not be enumerated or limited in embodiments, and provided that the first NF has the capability of initiating one or more sensing requests, the first NF shall fall within the protection scope of embodiments of the disclosure.

The first time period can be set according to actual circumstances. For example, the first time period may be 30 seconds, 15 minutes, 40 minutes, 1 hour, or longer or shorter, etc. All possible situations of the first time period will not be enumerated herein.

The one or more second sensing requests may be all second sensing requests received by the second functional entity within the first time period, and the number of the second sensing requests is not limited in embodiments.

Furthermore, the second functional entity receives from the first NF, within the first time period, the information of each second sensing request in the one or more second sensing requests, as follows. The second functional entity receives from the first NF, within the first time period, the information of each second sensing request in the one or more second sensing requests and an identifier of each second sensing request.

For example, any second sensing request is the *i*-th second sensing request (where *i* is an integer greater than or equal to 1), information of the *i*-th second sensing request may include at least one of: a sensing scenario of the *i*-th second sensing request, a sensing area of the *i*-th second sensing request, a sensing target of the *i*-th second sensing request, a sensing method of the *i*-th second sensing request, a sensing service type of the *i*-th second sensing request, a sensing service level of the *i*-th second sensing request, a confidence level of the *i*-th second sensing request, an accuracy of positioning estimate of the *i*-th second sensing request, an accuracy of velocity estimate of the *i*-th second sensing request, a sensing resolution of the *i*-th second sensing request, a maximum sensing service latency of the *i*-th second sensing request, a refresh rate of the *i*-th second sensing request, a missed detection rate of the *i*-th second sensing request, and a false alarm rate of the *i*-th second sensing request.

The aforementioned identifier may include at least one of: a transaction identification (ID), a notification target address, a notification correlation ID, and a client ID.

The above takes any one of the second sensing requests as an example. Since the type of contents contained in each second sensing request is the same as that in the i-th second sensing request, no further elaboration will be made herein.

When the second functional entity determines, based on the information of each second sensing request, that one or more second sensing requests with the same type parameter exist in the one or more second sensing requests, the second functional entity determines the one or more first sensing requests based on the one or more second sensing requests with the same type parameter, as follows. The second functional entity determines, based on the information of each second sensing request, one or more request groups and/or one or more second sensing requests that do not belong to any one of the request groups. Each request group in the one or more request groups includes multiple second sensing requests, different request groups include different second sensing requests, and different request groups correspond to different contents of type parameters. The second functional entity determines the one or more first sensing requests based on the one or more request groups and/or the one or more second sensing requests that do not belong to any one of the request groups. Herein, the second functional entity determines the one or more first sensing requests based on the one or more request groups and/or the one or more second sensing requests that do not belong to any one of the request groups, as follows. The second functional entity determines multiple first sensing requests based on multiple second sensing requests with the same type parameter in each request group, if there are one or more request groups; and/or, the second functional entity determines one or more first sensing requests based on the one or more second sensing requests that do not belong to any one of the request groups, if there are one or more second sensing requests that do not belong to any one of the request groups.

Herein, a type parameter includes at least one of: a sensing scenario, a sensing area, a sensing target, a sensing method, a sensing service type, and a sensing service level.

The second functional entity can pre-configure the aforementioned type parameter. Specifically, the name of a type parameter pre-configured by the second functional entity can be configured according to actual situations. For example, the second functional entity configures the sensing target as the type parameter or, the second functional entity configures the sensing scenario, the sensing area, and the sensing method as the type parameter, etc. The number and the specific type of the type parameter that may be pre-configured by the second functional entity are not limited or enumerated herein, and shall fall within the protection scope of the embodiments provided that at least one of the aforementioned type parameters is included. It can also be understood that, information in any second sensing request may not be specified as the type parameter; instead, the second functional entity specifies some parameters included in information of the second sensing request as the type parameters.

The sensing scenario may also be alternatively referred to as the sensing service type. The sensing scenario may include at least one of: object detection and tracking, environment monitoring, and motion monitoring, etc.

The sensing target may include at least one of: a region, a target UE, and a target object characteristic, etc.

The region may refer to a specific geographical position. In other words, the region may refer to a sensing target region. The region can be represented by a geographical coordinate, or, the region can be represented by at least one of a cell ID, and a tracking area identity (TAI), etc. It can be understood that this is only exemplary description. In actual processing, provided that the region can be uniquely determined as an actual geographical position, it shall fall within the protection scope of the embodiments.

The sensing area may be used to represent a type and/or property of the sensing target, and the sensing area may include at least one of: indoor, outdoor, an area size of the region, and a sensing target type, etc.

The sensing method may include at least one of: UE sensing, base station sensing, UE, and UE-base station collaborative sensing, etc.

The sensing service type may also be referred to as the sensing scenario, and the sensing service type may include at least one of: object detection and tracking, environment monitoring, and motion monitoring, etc.

The sensing service level refers to level divisions corresponding to different sensing scenarios or use cases.

Herein, the second functional entity determineing, based on the information of each second sensing request, one or more request groups and/or one or more second sensing requests that do not belong to any one of the request groups, may include the following three cases.

In a first case, the second functional entity determines one or more request groups based on the information of each second sensing request. In this case, any one of all second sensing requests received by the second functional entity shares the same content of the type parameter with one or more other second sensing requests. Therefore, all second sensing requests can be divided into at least one request group. For example, the type parameter includes the sensing target, the second functional entity receives ten second sensing requests, among which the 1st and the 2nd second sensing requests have the same content of the type parameter (for example, the sensing target is target UE1), the 3rd to the 7th second sensing requests have the same content of the type parameter (for example, the sensing target is target UE2), and the 8th to the 10th second sensing requests have the same content of the type parameter (for example, the sensing target is target UE3). Therefore, the 1st and the 2nd second sensing requests can be classified into request group *a,* the 3rd to the 7th second sensing requests can be classified into request group *b*, and the 8th to the 10th second sensing requests can be classified into request group *c*. In this way, a total of three request groups are obtained.

In a second case, the second functional entity determines multiple second sensing requests that do not belong to any one of the request groupsbased on a content of the type parameter of each second sensing request. In this case, any one of all second sensing requests received by the second functional entity does not share the same content of the type parameter with other second sensing requests. Therefore, each second sensing request in all second sensing requests exists as an independent second sensing request. For example, the second functional entity receives ten second sensing requests, and each second sensing request does not share the same content of the type parameter with other second sensing requests, that is, different second sensing requests correspond to different type parameters. In this case, the ten second sensing requests can be directly regarded as ten second sensing requests that do not belong to any one of the request groups.

In a third case, the second functional entity determines one or more request groups and one or more second sensing requests that do not belong to any one of the request groups based on the content of the type parameter of each second sensing request. In this case, any one of all second sensing requests received by the second functional entity may share the same content of the type parameter with one or more other second sensing requests, or may not share the same content of the type parameter with other second sensing requests. Therefore, all second sensing requests can be divided into at least one request group. For example, the type parameter includes the sensing target and the sensing scenario, the second functional entity receives ten second sensing requests, among which the 1st and the 2nd second sensing requests have the same content of the type parameter (for example, the sensing target is region *A*, and the sensing scenario is object detection and tracking), the 3rd to the 7th second sensing requests have the same content of type parameter (for example, the sensing target is region *A*, and the sensing scenario is action monitoring), and the 8th to the 10th second sensing requests have different contents of the type parameter from any one of other second sensing requests. Therefore, the 1st and the 2nd second sensing requests can be classified into request group *a,* the 3rd to the 7th second sensing requests can be classified into request group b, and the 8th to the 10th second sensing requests can be respectively regarded as the 1st second sensing request, the 2nd second sensing request, and the 3rd second sensing request. In this way, a total of two request groups and three second sensing requests that do not belong to any one of the request groups are obtained.

The multiple first sensing requests are determined based on the multiple second sensing requests with the same type parameter in each request group as follows. Multiple second sensing requests with the same type parameter in a *j*-th request group are regarded as multiple first sensing requests in a *j*-th sensing session group; and so on, the multiple second sensing requests with the same type parameter in each request group can be regarded as multiple first sensing requests in each sensing session group. Eventually, one or more sensing session groups and multiple first sensing requests inclucded in each sensing session group can be obtained, and different sensing session groups include different first sensing requests. *j* is an integer greater than or equal to 1. To further illustrate exemplarily with reference to the aforementioned first case, the 1st and the 2nd second sensing requests included in the request group *a* are regarded as the 1st and the 2nd first sensing requests in the 1st sensing session group, and so on. In this way, three sensing session groups can be obtained, and different sensing session groups include different first sensing requests.

One or more first sensing requests are determined based on the one or more second sensing requests that do not belong to any one of the request groups as follows. Each second sensing request that does not belong to any one of the request groups is separately regarded as one first sensing request.

With the aforementioned processing, after the second functional entity receives one or more second sensing requests at one time, the second functional entity may determine one or more first sensing requests based on the one or more second sensing requests. Then, the second functional entity aggregates the one or more first sensing requests to obtain a second sensing session.

In an embodiment, the information of the second sensing session includes a type parameter of the second sensing session. The type parameter of the second sensing session is a type parameter shared by (that is, common to) the one or more first sensing requests.

Optionally, the information of the second sensing session includes the type parameter of the second sensing session. The type parameter of the second sensing session is the type parameter shared by the multiple first sensing requests.

In the embodiments, the second sensing session may refer to any one of one or more second sensing sessions obtained by the second functional entity through aggregating. It can be noted that, processing performed by the second functional entity to obtain each second sensing session is the same. Therefore, in the embodiments, description of the second sensing session is for any one of the second sensing sessions, and description of each second sensing session will not be elaborated herein. Unless the quantity is specified in the following, the second sensing session refers to any one of the second sensing sessions generated by the second functional entity, which will not be repeated herein.

For example, any second sensing session is denoted as the *j*-th second sensing session and any sensing session group is denoted as the *j*-th sensing session group, the second functional entity may obtain a type parameter of the *j*-th second sensing session as follows. The second functional entity directly takes the common type parameter corresponding to multiple first sensing requests included in the *j*-th sensing session group as the type parameter of the *j*-th second sensing session.

For example, the type parameter includes the sensing scenario, the sensing target, and the sensing method. The *j*-th sensing session group includes four first sensing requests, and the four first sensing requests correspond to the same sensing scenario, the same sensing target, and the same sensing method. For instance, the sensing scenario is environment monitoring, the sensing target is target UE1, and the sensing method is base station sensing. Correspondingly, the second functional entity can directly take the aforementioned sensing scenario being environment monitoring, sensing target being target UE1, and sensing method being base station sensing, as the type parameter of the *j*-th second sensing session. The (*j*+1)-th sensing session group includes four first sensing requests, and the four first sensing requests correspond to the same sensing scenario, the same sensing target, and the same sensing method. For instance, the sensing scenario is environmental monitoring, the sensing target is region *A*, and the sensing method is UE-base station collaborative sensing. Correspondingly, the second functional entity can directly take the aforementioned sensing scenario being environmental monitoring, sensing target being region *A*, and sensing method being UE-base station collaborative sensing, as the type parameter of the (*j*+1)-th second sensing session.

Optionally, the information of the second sensing session includes the type parameter of the second sensing session. The type parameter of the second sensing session is the type parameter of one first sensing request.

In the aforementioned embodiments, in a case where each second sensing request that does not belong to any one of the request groups is regarded as one first sensing request separately, for example, any one of the first sensing requests is regarded as the *j*-th first sensing request, the second functional entity may obtain the type parameter of the *j*-th second sensing session as follows. The second functional entity may directly take the type parameter corresponding to the *j*-th first sensing request as the type parameter of the *j*-th second sensing session.

In an embodiment, the information of the second sensing session includes a requirement parameter of the second sensing session. The requirement parameter of the second sensing session is determined based on a requirement parameter of each first sensing request in the one or more first sensing requests.

Optionally, the information of the second sensing session includes the requirement parameter of the second sensing session. The requirement parameter of the second sensing session is determined based on a requirement parameter of each first sensing request in the multiple first sensing requests.

The requirement parameter includes at least one of: a confidence level, an accuracy of positioning estimate, an accuracy of velocity estimate, a sensing resolution, a maximum sensing service latency, a refresh rate, a missed detection rate, and a false alarm rate.

Herein, the second functional entity can pre-configure the aforementioned requirement parameters. Specifically, the name of the requirement parameter pre-configured by the second functional entity can be configured according to actual situations. For example, the second functional entity configures the confidence level and the accuracy of positioning estimate as the requirement parameter, or, the second functional entity configures all aforementioned contents as the requirement parameter, etc. The number and the specific type of the requirement parameter that may be pre-configured by the second functional entity are not limited or enumerated herein, and shall fall within the protection scope of the embodiments provided that at least one of the aforementioned requirement parameters is included. It can also be understood that, information in any second sensing request may not be specified as the requirement parameter, correspondingly, information in any first sensing request may not be specified as the requirement parameter. Instead, the second functional entity may specify, based on a definition of the requirement parameter, at least some parameters in the information of the first sensing request as the requirement parameter of the first sensing request.

The aforementioned confidence level may refer to a reliability of a sensing result.

The aforementioned accuracy of positioning estimate may include at least one of: a horizontal positioning accuracy, and a vertical positioning accuracy. The unit for accuracy can be configured according to actual needs. For example, the unit for accuracy can be any one of: meter, decimeter, centimeter, and millimeter, etc., which will not be enumerated or limited herein.

The aforementioned accuracy of velocity estimate may include at least one of: a horizontal velocity accuracy, and a vertical velocity accuracy.

The aforementioned sensing resolution may include at least one of: a range resolution (or a range sensing resolution), and a velocity resolution (or a velocity sensing resolution), etc.

The refresh rate may refer to a refresh frequency, for example, refreshing 10 times per second, etc.

Optionally, the requirement parameter of the second sensing session is the most stringent requirement parameter in requirement parameters of each first sensing request. As a preferred example, the second functional entity may select, from among requirement parameters of the same type of each first sensing request, the most stringent (or the highest) content (or value) as the requirement parameter of the second sensing session.

For example, any second sensing session is denoted as the *j*-th second sensing session and any sensing session group is denoted as the *j*-th sensing session group, the second functional entity may obtain a requirement parameter of the *j*-th second sensing session as follows. The second functional entity selects, from among the requirement parameters corresponding to each first sensing request in the multiple first sensing requests included in the *j*-th sensing session group, the most stringent requirement parameter in requirement parameters of the same type as the requirement parameter of the *j*-th second sensing session.

For example, assuming that the requirement parameter includes the accuracy of positioning estimate and the refresh rate, and the *j*-th sensing session group includes three first sensing requests. Correspondingly, the second functional entity selects, from among requirement parameters corresponding to each first sensing request in the multiple first sensing requests included in the *j*-th sensing session group, the most stringent requirement parameter in requirement parameters of the same type as the requirement parameter of the *j*-th second sensing session, as follows. The second functional entity selects, from among accuracies of positioning estimate (such as 1 meter, 10 centimeters, and 1 centimeter) corresponding to each of the three first sensing requests included in the *j*-th sensing session group, the most stringent accuracy of positioning estimate (i.e., 1 centimeter) as the accuracy of positioning estimate of the *j*-th second sensing session. The second functional entity selects, from among refresh rates (such as refreshing 10 times per second, refreshing 1 time per second, and refreshing 20 times per second) corresponding to each of the three first sensing requests included in the *j*-th sensing session group, the most stringent refresh rate (i.e., refrenshing 20 times per second) as the refresh rate of the *j*-th second sensing session.

It can be noted that this is only exemplary description. In actual processing, the requirement parameter may not be limited to the types exemplified above. Correspondingly, eventually-obtained requirement parameter of any second sensing session is not limited to those given in the above examples, yet types of requirement parameters will not be all enumerated herein.

Optionally, the information of the second sensing session includes the requirement parameter of the second sensing session. The requirement parameter of the second sensing session is determined based on the requirement parameter of said one first sensing request. In the aforementioned embodiments, in the case where each second sensing request that does not belong to any one of the request groups is regarded as a separate first sensing request, taking any first sensing request that is regarded as the *j*-th first sensing request as an example, the second functional entity may obtain the requirement parameter of the *j*-th second sensing session as follows. The second functional entity may directly take the requirement parameter corresponding to the *j*-th first sensing request as the requirement parameter of the *j*-th second sensing session.

Optionally, the requirement parameter of the second sensing session is any one of the requirement parameters of each first sensing request. As an optional example, the second functional entity may select, from among the requirement parameters of the same type of the first sensing request, any content (or value) as the requirement parameter of the second sensing session. The selecting method is similar to the aforementioned examples, and is different in that, in this example, it is necessary to randomly select any content or value from among the requirement parameter of the same type, which will not be repeated herein.

In an embodiment, the information of the second sensing session includes an identifier of the second sensing session.

The method further includes the following. The second functional entity stores a mapping relationship of the second sensing session. The mapping relationship of the second sensing session includes a mapping relationship between the identifier of the second sensing session and an identifier of each first sensing request in the one or more first sensing requests.

Optionally, the method further includes the following. The second functional entity stores the mapping relationship of the second sensing session. The mapping relationship of the second sensing session includes a mapping relationship between the identifier of the second sensing session and an identifier of each first sensing request in the multiple first sensing requests.

Herein, the second sensing session is a second sensing session corresponding to any one of the aforementioned sensing session groups, still taking the *j*-th second sensing session as an example, a mapping relationship of the *j*-th second sensing session includes a mapping relationship between an identifier of the *j*-th second sensing session and an identifier of each first sensing request in the *j*-th sensing session group.

The definition of the "identifier" of the first sensing request is the same as that in the aforementioned embodiments, therefore will not be repeated herein.

The second functional entity may locally generate the identifier of the second sensing session. An identifier of any second sensing session is used to distinguish the second sensing session from other sensing sessions. A method for the second functional entity to allocate the identifier of any second sensing session is not limited in the embodiments, and shall fall within the protection scope of the embodiments provided that the second functional entity stores a mapping relationship between the identifier of any second sensing session and the identifier of each of multiple first sensing requests corresponding to the second sensing session.

Optionally, the method further includes the following. The second functional entity stores the mapping relationship of the second sensing session. The mapping relationship of the second sensing session includes a mapping relationship between the identifier of the second sensing session and an identifier of one first sensing request.

In some possible implementations, each time the second functional entity receives a new sensing request (for example, referred to as the second sensing request), the second functional entity determines whether the type parameter of the second sensing request is the same as that of a sensing session previously sent by the second functional entity. If the type parameter of the second sensing request is not the same as that of the sensing session previously sent by the second functional entity, a new sensing session is generated seperately based on the second sensing request. At this time, the new sensing session corresponds to one sensing request. If the type parameter of the second sensing request is the same as that of the sensing session previously sent by the second functional entity (for example, the second sensing session), the second sensing request is aggregated into the second sensing session, and the second functional entity sends the information of the second sensing session if it is necessary to update the requirement parameter of the second sensing session.

It can be understood that, whenever the second functional entity sends information of any sensing session, provided that the sensing session is related to one or more sensing requests, it shall fall within the protection scope of the embodiments. Moreover, the sensing session can be regarded as the second sensing session in the embodiments, and multiple sensing requests related to the second sensing session can be regarded as one or more first sensing requests in the embodiments. Scenarios corresponding to this implementation are described in detail in the following.

Before the second functional entity sends the information of the second sensing session, the method may further include the following. The second functional entity receives the information of the second sensing request. The second functional entity aggregates the second sensing request into the second sensing session, when the second functional entity determines, based on the information of the second sensing request, that the type parameter of the second sensing request is the same as that in initial information of the second sensing session previously sent by the second functional entity.

The second functional entity may receive the information of the second sensing request as follows. The second functional entity receives from the first NF the information of the second sensing request and an identifier of the second sensing request. The description of the first NF is the same as that in the aforementioned embodiments, and will not be repeated herein. It can be noted that the quantity of second sensing request is one in this implementation. That is to say, any sensing request sent by the first NF (i.e., any sensing request received by the second functional entity) is referred to as the second sensing request in this implementation.

Possible contents contained in the information of the second sensing request are the same as those contained in any second sensing request in the aforementioned embodiments, and will not be repeated herein.

The description of the "identifier" is the same as that in the aforementioned embodiments, and will not be elaborated herein.

In an embodiment, the second functional entity may aggregate the second sensing request into the second sensing session as follows. When the second functional entity determines, based on the information of the second sensing request, that a requirement parameter of the second sensing request is lower than that of the second sensing session, the second functional entity takes the second sensing request and one or more previous sensing requests corresponding to the second sensing session as multiple first sensing requests, and updates the mapping relationship of the second sensing session based on the identifier of each first sensing request in the multiple first sensing requests, to obtain an updated mapping relationship of the second sensing session. The updated mapping relationship of the second sensing session includes: a mapping relationship between the identifier of the second sensing session and the identifier of each first sensing request in the multiple first sensing requests.

In this case, the second functional entity may not update initial information of the second sensing session, that is, the second functional entity may not need to send the initial information of the second sensing session again. The initial information of the second sensing session may include: the requirement parameter of the second sensing session, the type parameter of the second sensing session, and the identifier of the second sensing session. A method to obtain or determine the initial information of the second sensing session is not limited herein.

In an embodiment, the second functional entity may aggregate the second sensing request into the second sensing session as follows. When the second functional entity determines, based on the information of the second sensing request, that the requirement parameter of the second sensing request is higher than that of the second sensing session, the second functional entity updates the initial information of the second sensing session based on the requirement parameter of the second sensing request, to obtain the information of the second sensing session. The second functional entity takes the second sensing request and one or more previous sensing requests corresponding to the second sensing session as multiple first sensing requests. The second functional entity updates the mapping relationship of the second sensing session based on the identifier of each first sensing request in the multiple first sensing requests, to obtain the updated mapping relationship of the second sensing session.

After updating the initial information of the second sensing session based on the requirement parameter of the second sensing request to obtain the information of the second sensing session, the second functional entity may send the information of the second sensing session.

Optionally, the information of the second sensing session includes the type parameter of the second sensing session. The type parameter of the second sensing session is the type parameter shared by the multiple first sensing requests.

The description of the type parameter is the same as that in the aforementioned embodiments, and will not be repeated herein.

The second functional entity may obtain the type parameter of the second sensing session as follows. The second functional entity directly takes a type parameter of the second sensing session in the initial information of the second sensing session as a type parameter in the information of the second sensing session.

For example, the type parameter includes the sensing scenario, the sensing target, and the sensing method. Before receiving a new second sensing request, the second sensing session corresponds to one first sensing request. In the initial information of the second sensing session, the sensing scenario is environment monitoring, the sensing target is target UE2, and the sensing method is UE sensing. After the second functional entity receives the new second sensing request, the second functional entity determines that the type parameter of the second sensing request is the same as that of the second sensing session. At this time, the type parameter in the initial information of the second sensing session can be directly regarded as the type parameter in the information of the second sensing session, and the new second sensing request can be regarded as a first sensing request corresponding to the second sensing session, that is, the second sensing session corresponds to two first sensing requests.

Optionally, the information of the second sensing session includes the requirement parameter of the second sensing session. The requirement parameter of the second sensing session is determined based on the requirement parameter of each first sensing request in the multiple first sensing requests.

The description of the requirement parameter is the same as that in the aforementioned embodiments, and will not be repeated herein.

The requirement parameter of the second sensing session may be the most stringent requirement parameter in the requirement parameters corresponding to each first sensing request. As a preferred example, the second functional entity may select, from among requirement parameters of the same type of each first sensing request, the most stringent (or the highest) content (or value) as the requirement parameter of the second sensing session.

The second functional entity may obtain the requirement parameter of the second sensing session as follows. The second functional entity selects, from among requirement parameters corresponding to each first sensing request in the current multiple first sensing requests, the most stringent requirement parameter in the requirement parameters of the same type as the requirement parameter of the second sensing session. For example, assuming the requirement parameter includes the accuracy of positioning estimate and the refresh rate. Before receiving the new second sensing request, the second sensing session corresponds to one first sensing request, and the requirement parameters in the initial information of the second sensing session are an accuracy of positioning estimate of 1 meter and a refresh rate of refreshing 10 times per second. After the second functional entity receives the new second sensing request, an accuracy of positioning estimate of the second sensing request is 0.1 meter, and the refresh rate is refreahing 10 times per second. Since the requirement of the second sensing request is higher than the initial parameter of the second sensing session, it is necessary to update the requirement parameter of the second sensing session. A method to update may be as follows. Based on an accuracy of positioning estimate of the second sensing request being 0.1 meter, the requirement parameter in the initial information of the second sensing session is updated to obtain the information of the second sensing session. In addition, after the second functional entity obtains the information of the second sensing session through updating, the second functional entity may take the second sensing request as the first sensing request, that is, at this time, the second sensing session corresponds to two first sensing requests. It can be noted that this is only exemplary description. In actual processing, the requirement parameter may not be limited to the types exemplified above. Correspondingly, the eventually-obtained requirement parameter of the second sensing session is not limited to those in the above examples, yet types of requirement parameters will not be all enumerated herein.

As an optional example, the second functional entity may select, from among requirement parameters of the same type corresponding to each first sensing request, any content (or value) as the requirement parameter of the second sensing session. The selecting method is similar to the aforementioned examples, and is different in that, in this example, it is necessary to randomly select any content or value from among requirement parameters of the same type, which will not be repeated herein.

Optionally, the information of the second sensing session includes the identifier of the second sensing session. The second functional entity stores the mapping relationship of the second sensing session. The mapping relationship of the second sensing session includes the mapping relationship between the identifier of the second sensing session and the identifier of each first sensing request in the multiple first sensing requests.

Herein, the new second sensing request is aggregated for the second sensing session, so the second functional entity takes the new second sensing request as a new first sensing request corresponding to the second sensing session. The mapping relationship of the second sensing session eventually obtained includes the mapping relationship between the identifier of the second sensing session and the identifier of each first sensing request in the multiple first sensing requests.

The definition of the "identifier" of the first sensing request is the same as that in the aforementioned embodiments, therefore will not be repeated herein. The second functional entity may locally generate the identifier of the second sensing session. A method to generate the identifier of the second sensing session is not limited in the embodiments.

In an embodiment, after the second functional entity receives the information of the second sensing request, the method may further include the following. When the second functional entity determines, based on the information of the second sensing request, that the type parameter of the second sensing request is different from those of all sensing sessions previously sent by the second functional entity, the second functional entity generates, based on the information of the second sensing request, initial information of the new sensing session, and the second functional entity sends the initial information of the new sensing session.

The initial information of the new sensing session is generated based on the information of the second sensing request as follows. A requirement parameter, a type parameter, and an identifier of the new sensing session are generated based on the information of the second sensing request. The requirement parameter, the type parameter, and the identifier of the new sensing session are regarded as the initial information of the new sensing session. Furthermore, the second functional entity stores a mapping relationship between the identifier of the new sensing session and the identifier of the second sensing request.

In some possible implementations, after the second functional entity obtains the information of the second sensing session, the second functional entity may send the information of the second sensing session to the first functional entity. The second sensing session herein may refer to any one of the second sensing sessions in the aforementioned embodiments.

In some possible implementations, a first functional entity receives multiple second sensing sessions within a period of time (such as a first time period). Then, the first functional entity aggregates multiple second sensing sessions at once, to obtain multiple first sensing sessions with the same measurement type parameter. Then, the first functional entity generates a corresponding first sensing task based on the multiple first sensing sessions with the same measurement type parameter. In this implementation, the first functional entity may obtain one or more first sensing tasks at once. Any one of the first sensing tasks relates to multiple second sensing sessions, different first sensing tasks relate to different second sensing sessions, and different first sensing tasks correspond to different measurement type parameters. Scenarios corresponding to this implementation are described in detail in the following.

Before the first functional entity sends information of the first sensing task, the method may further include the following. The first functional entity receives information of each second sensing session in multiple second sensing sessions. The first functional entity determines a parameter corresponding to each second sensing session, based on the information of each second sensing session in the multiple second sensing session. When the first functional entity determines, based on the parameter corresponding to each second sensing session, that multiple second sensing sessions which correspond to the same sensing device and have the same measurement type parameter exist in the multiple second sensing sessions, the first functional entity determines the multiple first sensing sessions, based on the multiple second sensing sessions which correspond to the same sensing device and have the same measurement type parameter.

Herein, the first functional entity receives information of each sensing session in the multiple second sensing sessions as follows. The first functional entity receives, within a second time period, the information of each second sensing session in the multiple second sensing sessions from the second functional entity.

As described in the aforementioned embodiments, the first functional entity and the second functional entity may be deployed in different functional entities (or different core network elements). In this case, transmission of the information of the second sensing session between the first functional entity and the second functional entity, may refer to transmission of the information of the second sensing session between different functional entities (or different network elements). Or, the first functional entity and the second functional entity are deployed in the same functional network element (such as the SF). In this case, transmission of the information of the second sensing session between the first functional entity and the second functional entity, may refer to transmission of the information of the second sensing session between different functional modules (or different processing units) within the same functional network element.

The second time period can be set according to actual circumstances. For example, the second time period may be 50 seconds, 30 minutes, 50 minutes, 2 hours, or longer or shorter, etc. All possible situations of the second time period will not be enumerated herein. The second time period and the aforementioned first time period can be the same or different. For example, the second time period can be longer than the aforementioned first time period, all of which shall fall within the protection scope of the embodiments. The relationship between the two is not enumerated or limited herein.

The multiple second sensing sessions may be all second sensing sessions received by the first functional entity within the second time period. The number of second sensing sessions is not limited in the embodiments, and shall fall within the protection scope of the embodiments provided that the number of second sensing sessions is greater than or equal to 2.

For example, any one of the multiple second sensing sessions is the *j*-th second sensing session, information of the *j*-th second sensing session may include a type parameter of the *j*-th second sensing session. The type parameter of the *j*-th second sensing session is a type parameter shared by multiple first sensing requests. And/or, the information of the *j*-th second sensing session includes a requirement parameter of the *j*-th second sensing session. The requirement parameter of the *j*-th second sensing session is determined based on a requirement parameter of each first sensing request in the multiple first sensing requests. And/or, the information of the *j*-th second sensing session includes an identifier of the *j*-th second sensing session. The method to determine the information of the *j*-th second sensing session has been described in detail in the aforementioned embodiments, and will not be repeated herein.

The first functional entity determines the parameter corresponding to each second sensing session based on the information of each second sensing session in the multiple second sensing sessions. A parameter corresponding to the second sensing session includes at least one of: an identifier of the second sensing session, an sensing device corresponding to the second sensing session, an measurement type parameter corresponding to the second sensing session, and a reporting requirement parameter corresponding to the second sensing session.

For example, any second sensing session is the *j*-th second sensing session, the parameter corresponding to the *j*-th second sensing session includes at least one of: the identifier of the *j*-th second sensing session, a sensing device corresponding to the *j*-th second sensing session, a measurement type parameter corresponding to the *j*-th second sensing session, and a reporting requirement parameter corresponding to the *j*-th second sensing session.

Herein, an identifier of the *j*-th second sensing session in the parameter corresponding to the *j*-th second sensing session, can be an identifier of the *j*-th second sensing session in the information of the *j*-th second sensing session.

A sensing device corresponding to the *j*-th second sensing session in the parameter corresponding to the *j*-th second sensing session, may be determined based on a sensing target in the type parameter in the information of the *j*-th second sensing session. Specifically, the first functional entity may operate as follows. The first functional entity discovers or identifies one or more candidate sensing devices according to a sensing target of the *j*-th second sensing session. The first functional entity determines a sensing device that can perform the *j*-th second sensing session or can join the *j*-th second sensing session, according to sensing capability information of each candidate sensing device in the one or more candidate sensing devices. The sensing capability information of each candidate sensing device may be pre-obtained by the first functional entity, and is not limited herein.

The method to identify one or more corresponding candidate sensing devices according to the sensing target of the *j*-th second sensing session may be one of the following. The first functional entity determines one or more candidate sensing devices corresponding to the sensing target of the *j*-th second sensing session, by querying other network elements (such as at least one of an access and mobility management function (AMF), a unified data repository (UDR), and a unified data management (UDM)). The first functional entity determines the one or more candidate sensing devices corresponding to the sensing target of the *j*-th second sensing session by locally querying. Furthermore, the first functional entity may determine the one or more candidate sensing devices corresponding to the sensing target of the *j*-th second sensing session by locally querying as follows. The first functional entity determines the one or more candidate sensing devices corresponding to the sensing target of the *j*-th second sensing session by locally querying an association relationship between a candidate sensing target and a candidate sensing device. The association relationship between the candidate sensing target and the candidate sensing device may be pre-configured, and is not limited or enumerated herein.

The method for the first functional entity to determine the measurement type parameter corresponding to the *j*-th second sensing session and the reporting requirement parameter corresponding to the *j*-th second sensing session is not limited in the embodiments, and shall fall within the protection scope of the embodiments provided that the measurement type parameter corresponding to the *j*-th second sensing session and the reporting requirement parameter corresponding to the *j*-th second sensing session can be determined based on the information of the *j*-th second sensing session.

When the first functional entity determines, based on the parameter corresponding to each second sensing session, that multiple second sensing sessions which correspond to the same sensing device and have the same measurement type parameter exist in the multiple second sensing sessions, the first functional entity determines the multiple first sensing sessions based on the multiple second sensing sessions which correspond to the same sensing device and have the same measurement type parameter, as follows. The first functional entity determines, based on the parameter corresponding to each second sensing session, one or more measurement type groups and/or one or more second sensing sessions that do not belong to any one of the measurement type groups. A measurement type group in the one or more measurement type groups includes multiple second sensing sessions, multiple second sensing sessions in the same measurement type group correspond to the same sensing device and have the same measurement type parameter, different measurement type groups include different second sensing sessions, and different measurement type groups correspond to different contents of measurement type parameter and/or different sensing devices. When there are one or more measurement type groups, the first functional entity determines multiple first sensing sessions based on the multiple second sensing sessions which correspond to the same sensing device and have the same measurement type parameter in each measurement type group.

Herein, the measurement type parameter includes at least one of: a data type to be reported, and a reference signal used for measuring.

The first functional entity can pre-configure the aforementioned measurement type parameters. Specifically, the name of the measurement type parameter pre-configured by the first functional entity can be configured according to actual situations. For example, the first functional entity configures the data type to be reported as the measurement type parameter or, the first functional entity configures all the aforementioned contents as the measurement type parameter, etc. The number and the specific type of the measurement type parameter that may be pre-configured by the first functional entity are not limited or enumerated herein, and shall fall within the protection scope of the embodiments provided that at least one of the aforementioned measurement type parameters is included. It can also be understood that, information in a parameter corresponding to any second sensing session may not be specified as the measurement type parameter; instead, the first functional entity specifies some parameters included in parameters corresponding to the second sensing session as the measurement type parameters.

The data type to be reported may include at least one of: point cloud information, channel estimation information, and Doppler information, etc.

The reference signal used for measuring may include a positioning reference signal (PRS) sent by the sensing device, etc. It can be understood that this is only exemplary description. In actual processing, other types of reference signals may also be included, and will not be enumerated herein.

Herein, the first functional entity determining, based on the parameter corresponding to each second sensing session, one or more measurement type groups and/or one or more second sensing sessions that do not belong to any one of the measurement type groups, may include the following three cases.

In a first case, the first functional entity determines one or more measurement type groups based on the parameter corresponding to each second sensing session. In this case, any one of all second sensing sessions received by the first functional entity shares the same content of the measurement type parameter with one or more other second sensing sessions. Therefore, all second sensing sessions can be divided into at least one measurement type group. For example, the measurement type parameter includes the data type to be reported, the first functional entity receives five second sensing sessions, among which the 1st and the 2nd second sensing sessions correspond to the same sensing device *A*, and have the same content of the measurement type parameter (for example, the data type to be reported is point cloud information), the 3rd to the 5th second sensing sessions correspond to the same sensing device *B*, and have the same content of the measurement type parameter (for example, the data type to be reported is Doppler information). Therefore, the 1st and the 2nd second sensing sessions can be classified into measurement type group *a,* and the 3rd to the 5th second sensing sessions can be classified into measurement type group *b.* In this way, a total of two measurement type groups are obtained.

In a second case, the first functional entity determines one or more second sensing sessions that do not belong to any one of the measurement type groups based on the parameter corresponding to each second sensing session. In this case, any one of all second sensing sessions received by the second functional entity does not share the same content of the measurement type parameter with other second sensing sessions. Therefore, each second sensing session in all second sensing sessions exists as an independent second sensing session.

In a third case, the first functional entity determines one or more measurement type groups and/or one or more second sensing sessions that do not belong to any one of the measurement type groups based on the parameter corresponding to each second sensing session. For example, the measurement type parameter includes the data type to be reported, the first functional entity receives five second sensing sessions, among which the 1st and the 2nd second sensing sessions correspond to the same sensing device A and have the same content of the measurement type parameter (for example, the data type to be reported is point cloud information), the 3rd to the 5th second sensing sessions correspond to the same sensing device *B*, but have different contents of the measurement type parameter (for example, the data type to be reported is point cloud information and channel estimation information respectively). Therefore, the 1st and the 2nd second sensing sessions can be classified into measurement type group *a,* and the 3rd to the 5th second sensing sessions exist independently.

When there are one or more measurement type groups, the multiple first sensing sessions are determined based on the multiple second sensing sessions which correspond to the same sensing device and have the same measurement type parameter in each measurement type group as follows. When there are one or more measurement type groups, multiple second sensing sessions which correspond to the same sensing device and have the same measurement type parameter, in a k-th measurement type group, are regrded as multiple first sensing sessions in a *k-*th sensing task group; and so on, the multiple second sensing sessions which correspond to the same sensing device and have the same measurement type parameter, in each measurement type group, can be regarded as the multiple first sensing sessions in each sensing task group. Eventually, one or more sensing task groups and multiple first sensing sessions included in each sensing task group can be obtained, and different sensing task groups include different first sensing sessions. *k* is an integer greater than or equal to 1. To further illustrate exemplarily with reference to the aforementioned first case, the 1st and the 2nd second sensing sessions included in the measurement type group *a* are regarded as the 1st and the 2nd first sensing sessions in the 1st sensing task group, and so on. In this way, two sensing task groups can be obtained, and different sensing task groups include different first sensing sessions.

With the aforementioned processing, after the first functional entity receives multiple second sensing sessions at one time, the first functional entity may obtain multiple first sensing sessions included in each sensing task group in the one or more sensing task groups. Therefore, in the embodiments, the first functional entity may aggregate multiple first sensing sessions to obtain the first sensing task as follows. The first functional entity aggregates multiple first sensing sessions included in each sensing task group in the one or more sensing task groups to obtain a first sensing task corresponding to each sensing task group.

In an embodiment, the information of the first sensing task includes a measurement type parameter of the first sensing task. The measurement type parameter of the first sensing task is a measurement type parameter shared by the multiple first sensing sessions.

In the embodiments, the first sensing task may refer to any one of one or more first sensing tasks obtained by the first functional entity through aggregating. It can be noted that, processing performed by the first functional entity to obtain each first sensing task is the same. Therefore, in the embodiments, description of the first sensing task is for any one of the first sensing tasks, and description of each first sensing task will not be elaborated herein. Unless the quantity is specified in the following, the first sensing task refers to any one of the first sensing tasks generated by the first functional entity, which will not be repeated herein.

For example, any first sensing task is denoted as the *k*-th first sensing task and any sensing task group is denoted as the *k*-th sensing task group, the first functional entity may obtain the measurement type parameter of the *k*-th first sensing task as follows. The first functional entity directly takes the same measurement type parameter corresponding to multiple first sensing sessions included in the *k*-th sensing task group as the measurement type parameter of the *k*-th first sensing task.

For example, the measurement type parameter includes the data type to be reported, and the reference signal used for measuring. The *k*-th sensing task group includes four first sensing sessions, and the four first sensing sessions correspond to the same data type to be reported and the same reference signal used for measuring. The data type to be reported is channel estimation information, and the reference signal used for measuring is PRS sent by the base station. Correspondingly, the data type to be reported being channel estimation information, and the reference signal used for measuring being PRS sent by the base station, can be directly regarded as the measurement type parameter of the *k*-th first sensing task.

In an embodiment, the information of the first sensing task includes a reporting requirement parameter of the first sensing task. The reporting requirement parameter of the first sensing task is determined based on a reporting requirement parameter corresponding to each first sensing session in the multiple first sensing sessions.

The reporting requirement parameter includes at least one of: a reporting frequency, a reporting latency-requirement, a reporting reliability, a reporting packet-loss rate, and a reporting bandwidth.

Herein, the first functional entity can pre-configure the reporting requirement parameter. Specifically, the name of the reporting requirement parameter can be configured according to actual situations. For example, the first functional entity can configure the reporting frequency and the reporting latency-requirement as the reporting requirement parameter, or, the first functional entity can configure all aforementioned contents as the reporting requirement parameter, etc. The number and the specific type of the reporting requirement parameter that may be pre-configured by the first functional entity are not limited or enumerated herein, and shall fall within the protection scope of the embodiments provided that at least one of the aforementioned reporting requirement parameters is included.

The reporting frequency may refer to a reporting frequency within a unit of time. The unit of time can be set according to actual circumstances. For example, the unit of time may be 1 second, and the reporting frequency may be 10 reports per second, etc.

The reporting latency-requirement may be 10 ms, longer than 10 ms, or shorter than 10 ms, which is not limited herein.

Optionally, the reporting requirement parameter of the first sensing task is the most stringent reporting requirement parameter in the reporting requirement parameters corresponding to each first sensing session. As a preferred example, the first functional entity may select, from among reporting requirement parameters of the same type of each first sensing session, the most stringent (or the highest) content (or value) as the reporting requirement parameter of the first sensing task.

For example, any first sensing task is denoted as the *k*-th first sensing task and any sensing task group is denoted as the *k*-th sensing task group, the first functional entity may obtain a reporting requirement parameter of the *k*-th first sensing task as follows. The first functional entity selects, from among the reporting requirement parameters corresponding to each first sensing session in the multiple first sensing sessions included in the *k*-th sensing task group, the most stringent reporting requirement parameter in reporting requirement parameters of the same type as the reporting requirement parameter of the *k*-th first sensing task.

For example, assuming that the reporting requirement parameter includes the reporting frequency, and the *k*-th sensing task group includes three first sensing sessions. Correspondingly, the first functional entity selects, from among reporting frequencies (such as 10 times per second, 1 time per second, and 20 times per second) corresponding to each of the three first sensing sessions included in the *k*-th sensing task group, the most stringent reporting frequency of 20 times per second as a reporting frequency of the k-th first sensing task. It can be noted that this is only exemplary description. In actual processing, the reporting requirement parameter may not be limited to the types exemplified above. Correspondingly, eventually-obtained reporting requirement parameter of any first sensing task is not limited to those given in the above examples, yet types of reporting requirement parameters will not be all enumerated herein.

In an embodiment, the information of the first sensing task also includes an identifier of the first sensing task.

The method further includes the following. The first functional entity stores a mapping relationship of the first sensing task. The mapping relationship of the first sensing task includes a mapping relationship between the identifier of the first sensing task and an identifier of each first sensing session in the one or more first sensing sessions.

Herein, the first sensing task is any one of the aforementioned first sensing tasks, still taking the k-th first sensing task as an example, a mapping relationship of the *k*-th first sensing task includes a mapping relationship between an identifier of the *k*-th first sensing task and an identifier of each first sensing session in the *k*-th sensing task group.

The first functional entity may locally generate the identifier of the first sensing task. An identifier of any first sensing task is used to distinguish the first sensing task from other sensing tasks. A method for the first functional entity to allocate the identifier of any first sensing task is not limited in the embodiments, and shall fall within the protection scope of the embodiments provided that the first functional entity stores the mapping relationship between the identifier of any first sensing task and the identifier of each of multiple first sensing sessions corresponding to first sensing tasks.

In some possible implementations, each time the first functional entity receives a new sensing session (for example, referred to as the second sensing session), the first functional entity determines whether the measurement type parameter of the second sensing session is the same as that of a previously-sent sensing task. If the measurement type parameter of the second sensing session is not the same as that of the previously-sent sensing task, a new sensing task is generated seperately based on the second sensing session. At this time, the new sensing task corresponds to one sensing session. If the measurement type parameter of the second sensing session is the same as that of the sensing task previously sent by the first functional entity (for example, the first sensing task), the information of the first sensing task is updated based on the second sensing session, and the first functional entity sends the information of the first sensing task if it is necessary to update the reporting requirement parameters of the first sensing task.

It can be understood that, whenever the first functional entity sends information of any sensing task, provided that the sensing task is related to multiple sensing sessions, it shall fall within the protection scope of the embodiments. Moreover, the sensing task can be regarded as the first sensing task in the embodiments, and multiple sensing sessions related to the first sensing task can be regarded as multiple first sensing sessions in the embodiments. Scenarios corresponding to this implementation are described in detail in the following.

Before the first functional entity sends the information of the first sensing task, the method may further include the following. The first functional entity receives the information of the second sensing session. The first functional entity determines the parameter corresponding to the second sensing session based on the information of the second sensing session. The first functional entity aggregates the second sensing session into the first sensing task, when the first functional entity determines, based on the parameter corresponding to the second sensing session, that the second sensing session corresponds to the sensing device and the measurement type parameter same as the first sensing task.

It can be noted that the quantity of second sensing session is one in this implementation, that is, any sensing session received by the first functional entity is referred to as the second sensing session in this implementation.

Possible contents contained in the information of the second sensing session are the same as those contained in any second sensing session in the aforementioned embodiments, and will not be repeated herein. Processing to determine the parameter corresponding to the second sensing session based on the information of the second sensing session is the same as processing of information of any second sensing session in the aforementioned embodiments, and will not be repeated herein.

In an embodiment, the first functional entity may aggregate the second sensing session into the first sensing task as follows. When the first functional entity determines, that a reporting requirement parameter of the second sensing session is lower than that of the first sensing task, the first functional entity takes the second sensing session and one or more previous sensing sessions corresponding to the first sensing task as multiple first sensing sessions, and updates the mapping relationship of the first sensing task based on the identifier of each first sensing session, to obtain an updated mapping relationship of the first sensing task. The updated mapping relationship of the first sensing task includes: a mapping relationship between the identifier of the first sensing task and the identifier of each first sensing session in the multiple first sensing sessions.

In this case, the first functional entity may not update initial information of the first sensing task, that is, the first functional entity may not need to send the initial information of the first sensing task again. The initial information of the first sensing task may include: the reporting requirement parameter of the first sensing task, the measurement type parameter of the first sensing task, and the identifier of the first sensing task. A method to obtain or determine the initial information of the first sensing task is not limited herein.

In an embodiment, the first functional entity may aggregate the second sensing session into the first sensing task as follows. When the first functional entity determines, based on the information of the second sensing session, that the reporting requirement parameter of the second sensing session is higher than that of the first sensing task, the first functional entity takes the second sensing session and one or more previous sensing sessions corresponding to the first sensing task as multiple first sensing sessions. The first functional entity updates the mapping relationship of the first sensing task based on identifiers of the multiple first sensing sessions, to obtain the updated mapping relationship of the first sensing task. The first functional entity updates the initial information of the first sensing task based on reporting requirement parameters of multiple first sensing sessions, to obtain the information of the first sensing task.

After updating the initial information of the first sensing task based on a device requirement parameter of the multiple first sensing sessions to obtain the information of the first sensing task, the first functional entity may send the information of the first sensing task.

Optionally, the information of the first sensing task includes the measurement type parameter of the first sensing task. The measurement type parameter of the first sensing task is the measurement type parameter shared by the multiple first sensing sessions.

The description of the measurement type parameter is the same as that in the aforementioned embodiments, and will not be repeated herein.

The first functional entity may obtain the measurement type parameter of the first sensing task as follows. The first functional entity directly takes a measurement type parameter of the first sensing task in the initial information of the first sensing task as a measurement type parameter in the information of the first sensing task.

For example, the measurement type parameter includes the reference signal used for measuring. Before receiving a new second sensing session, the first sensing task corresponds to one first sensing session. In the initial information of the first sensing task, the reference signal used for measuring is PRS. After the first functional entity receives the new second sensing session, the first functional entity determines that the type parameter of the second sensing session is the same as that of the first sensing task. At this time, the measurement type parameter in the initial information of the first sensing task can be directly regarded as the measurement type parameter in the information of the first sensing task, and the new second sensing session can be regarded as a first sensing session corresponding to the first sensing task, that is, the first sensing task corresponds to two first sensing sessions.

Optionally, the information of the first sensing task includes the reporting requirement parameter of the first sensing task. The reporting requirement parameter of the first sensing task is determined based on the reporting requirement parameter of each first sensing session in the multiple first sensing sessions.

The reporting requirement parameter of the first sensing task is the most stringent reporting requirement parameter in the reporting requirement parameters corresponding to each first sensing session. As a preferred example, the first functional entity may select, from among reporting requirement parameters of the same type of each first sensing session, the most stringent (or the highest) content (or value) as the reporting requirement parameter of the first sensing task.

The first functional entity may obtain the reporting requirement parameter of the first sensing task as follows. The first functional entity selects, from among the reporting requirement parameters corresponding to each first sensing session in the current multiple first sensing sessions, the most stringent reporting requirement parameter in the reporting requirement parameters of the same type as the reporting requirement parameter of the first sensing task.

In addition, after the first functional entity obtains the information of the first sensing task through updating, the first functional entity may also take the second sensing session that being aggregated into the first sensing task as the first sensing session, that is, at this time, the first sensing task corresponds to two first sensing sessions.

Optionally, the information of the first sensing task also includes the identifier of the first sensing task. The first functional entity stores the mapping relationship of the first sensing task. The mapping relationship of the first sensing task includes the mapping relationship between the identifier of the first sensing task and the identifier of each first sensing session in the multiple first sensing sessions.

Herein, the new second sensing session is aggregated for the first sensing task, so the first functional entity takes the new second sensing session as a new first sensing session corresponding to the first sensing task. The mapping relationship of the first sensing task eventually obtained includes the mapping relationship between the identifier of the first sensing task and the identifier of each first sensing session.

In an embodiment, after the first functional entity determines the parameter corresponding to the second sensing session, based on the information of the second sensing session, the method may further include the following. When the first functional entity determines, based on the parameter corresponding to the second sensing session, that the sensing device corresponding to the second sensing session and the measurement type parameter corresponding to the second sensing session are different from type parameters of all previously-sent sensing tasks, the first functional entity generates, based on the information of the second sensing session, initial information of the new sensing task, and the first functional entity sends the initial information of the new sensing task.

The initial information of the new sensing task is generated based on the parameter corresponding to the second sensing session as follows. A reporting requirement parameter, a measurement type parameter, and an identifier of the new sensing task are generated based on the parameter corresponding to the second sensing session. The reporting requirement parameter, the measurement type parameter, and the identifier of the new sensing task are regarded as the initial information of the new sensing task. Furthermore, the first functional entity stores a mapping relationship between the identifier of the new sensing task and the identifier of the second sensing session.

In some possible implementations, the sensing device may receive the information of the first sensing task as follows. The sensing device receives the information of the first sensing task sent by the first functional entity.

Furthermore, after the sensing device receives the information of the first sensing task, the sensing device may operate as follows. The sensing device measures sensing data based on the information of the first sensing task, to obtain measurement data corresponding to the first sensing task. The sensing device sends the measurement data corresponding to the first sensing task.

Herein, the sensing device sends the measurement data corresponding to the first sensing task as follows. The sensing device sends the identifier of the first sensing task and the measurement data corresponding to the first sensing task to the first functional entity.

In addition, after the sensing device receives the information of the first sensing task, and before the sensing device measures the sensing data based on the information of the first sensing task, the method may further include the following. The sensing device sends a configuration response to the first functional entity. The configuration response is used to indicate the first functional entity that the sensing device is configured successfully based on the first sensing task. Correspondingly, after the first functional entity sends the information of the first sensing task, the first functional entity may further receive the configuration response sent by the sensing device.

In some possible implementations, after the first functional entity sends the information of the first sensing task, the method may include the following. The first functional entity receives the measurement data corresponding to the first sensing task. The first functional entity sends a sensing result corresponding to each first sensing session in multiple first sensing sessions. The sensing result corresponding to each first sensing session is determined based on the measurement data corresponding to the first sensing task and the reporting requirement parameter corresponding to each first sensing session.

Herein, the first functional entity receives the measurement data corresponding to the first sensing task as follows. The first functional entity receives the measurement data corresponding to the first sensing task and the identifier of the first sensing task sent by the sensing device.

Correspondingly, the first functional entity may determine the sensing result corresponding to each first sensing session based on the measurement data corresponding to the first sensing task and the reporting requirement parameter corresponding to each first sensing session.

Herein, the first functional entity may determine the sensing result corresponding to each first sensing session based on the measurement data corresponding to the first sensing task and the reporting requirement parameter corresponding to each first sensing session as follows. The first functional entity may determine the mapping relationship of the first sensing task based on the identifier of the first sensing task. The first functional entity may determine the identifier of each first sensing session in the multiple first sensing sessions based on the mapping relationship of the first sensing task. The first functional entity may determine the reporting requirement parameter corresponding to each first sensing session based on the identification of each first sensing session. The first functional entity may determine the sensing result corresponding to each first sensing session based on the measurement data corresponding to the first sensing task and the reporting requirement parameter corresponding to each first sensing session.

The method for the first functional entity to obtain the sensing result corresponding to each first sensing session may be as follows. The first functional entity converts or maps measurement data according to a reporting requirement parameter, to obtain a sensing result of a granularity of each first sensing session. The method for the first functional entity to calculate the sensing result corresponding to each first sensing session based on a granularity of a sensing session is not limited or enumerated in the embodiments.

The first functional entity may send the sensing result corresponding to each first sensing session in the multiple first sensing sessions as follows. The first functional entity sends the identifier of each first sensing session and the sensing result corresponding to each first sensing session to the second functional entity. That is to say, the first functional entity may associate or bind the sensing result corresponding to each first sensing session to the identifier of each first sensing session, and the first functional entity may report to the second functional entity.

It can also be noted that, the information transmitted between the first functional entity and the second functional entity may be transmitted between different processing modules or processing units within the same network element (or the same functional entity), or may be transmitted between different network elements (or different functional entities), which is similar to the description in the aforementioned embodiments and will not be repeated herein.

In some possible implementations, after the second functional entity sends the information of the second sensing session, the method may include the following. The second functional entity receives a sensing result corresponding to the second sensing session. The second functional entity sends a sensing result corresponding to each first sensing request in multiple first sensing requests. The sensing result corresponding to each first sensing request is determined based on the sensing result corresponding to the second sensing session and the requirement parameter of each first sensing request.

Herein, it can be noted that, after the second functional entity sends the information of the second sensing session to the first functional entity, the first functional entity determines that multiple first sensing sessions which have the same measurement type parameter and correspond to the same sensing device exist in the second sensing sessions, and generates a first sensing task based on the multiple first sensing sessions. Therefore, when the first functional entity reports a sensing result corresponding to any one of the first sensing sessions to the second functional entity, the second functional entity may correspond any one of the first sensing sessions to any one of the second sensing sessions.

Based on this, the second functional entity may receive the sensing result corresponding to the second sensing session as follows. The second functional entity receives an identifier of the first sensing session and a sensing result corresponding to the first sensing session sent by the first functional entity. The second functional entity takes the identifier of the first sensing session and the sensing result corresponding to the first sensing session, as an identifier of the second sensing session and the sensing result corresponding to the second sensing session.

Correspondingly, the second functional entity may determine the sensing result corresponding to each first sensing request based on the sensing result corresponding to the second sensing session and the requirement parameter of each first sensing request.

Herein, the second functional entity may determine the sensing result corresponding to each first sensing request based on the sensing result corresponding to the second sensing session and the requirement parameter of each first sensing request as follows. The second functional entity determines the mapping relationship of the second sensing session based on the identifier of the second sensing session. The second functional entity determines the identifier of each first sensing request in the multiple first sensing requests based on the mapping relationship of the second sensing session. The second functional entity determines a requirement parameter corresponding to each first sensing request based on the identifier of each first sensing request. The second functional entity determines the sensing result corresponding to each first sensing request based on the sensing result corresponding to the second sensing session and the requirement parameter corresponding to each first sensing request.

The method for the second functional entity to obtain sensing results corresponding to different first sensing requests may be as follows. The second functional entity converts or maps the sensing result corresponding to the second sensing session according to requirement parameters of different first sensing requests, to obtain a sensing result of a granularity of each first sensing request. The method for the second functional entity to calculate the sensing result corresponding to each first sensing request based on a granularity of the sensing request is not limited or enumerated in the embodiments.

The second functional entity may send the sensing result corresponding to each first sensing request in the multiple first sensing requests as follows. The second functional entity sends the identifier of each first sensing request and a sensing result corresponding to the each first sensing request to the first NF. That is to say, the second functional entity may associate or bind the sensing result corresponding to each first sensing request to the identifier of the first sensing request, and the second functional entity may report to the first NF.

In some possible implementations, after the second functional entity sends the information of the second sensing session, the method may further include the following. The second functional entity receives the information of the second sensing request. When the second functional entity determines, based on the information of the second sensing request, that a type parameter of the second sensing request is the same as that of the second sensing session, the second functional entity aggregates the second sensing request into the second sensing session.

Possible contents contained in the information of the second sensing request, are the same as those contained in any second sensing request in the aforementioned embodiments, and will not be repeated herein. The second sensing request is sent by the first NF to the second functional entity. For the sake of maintaining consistency, in the implementations, the sensing request sent by the first NF is not differentiated in expression, but is uniformly referred to as the second sensing request.

It can be noted that an executing timing of the implementations is different from those of the aforementioned embodiments. The implementations protect a scenario where the second functional entity receives a new second sensing request again after the second functional entity sends the information of the second sensing session.

In an embodiment, the second functional entity may aggregate the second sensing request into the second sensing session as follows. The second functional entity obtains the updated mapping relationship of the second sensing session, based on the identifier of the second sensing request. The updated mapping relationship of the second sensing session includes a mapping relationship between the identifier of the second sensing session, the identifier of each first sensing request in multiple first sensing requests, and the identifier of the second sensing request.

Specifically, the second functional entity may obtain the updated mapping relationship of the second sensing session, based on the identifier of the second sensing request, as follows. When the second functional entity determines, based on the information of the second sensing request, that a requirement parameter of the second sensing request is lower than that of the second sensing session, the second functional entity updates the mapping relationship of the second sensing session, based on the second sensing request and the multiple first sensing requests corresponding to the second sensing session, to obtain the updated mapping relationship of the second sensing session.

In this case, the second functional entity may not update the information of the second sensing session, that is, the second functional entity may not need to send the information of the second sensing session again. The method to determine the information of the second sensing session is the same as that in the aforementioned embodiments, and is not limited herein.

In an embodiment, the second functional entity may aggregate the second sensing request into the second sensing session as follows. When the second functional entity determines, based on the information of the second sensing request, that the requirement parameter of the second sensing request is higher than that of the second sensing session, the second functional entity updates the information of the second sensing session based on the requirement parameter of the second sensing request, to obtain updated information of the second sensing session. In addition, the second functional entity may also aggregate the second sensing request into the second sensing session as follows. The second functional entity obtains the updated mapping relationship of the second sensing session based on the identifier of the second sensing request.

Furthermore, after updating the information of the second sensing session based on the requirement parameter of the second sensing request to obtain the updated information of the second sensing session, the second functional entity may send the updated information of the second sensing session.

Optionally, the updated information of the second sensing session includes an updated requirement parameter of the second sensing session. The updated requirement parameter of the second sensing session is determined based on the requirement parameter of the second sensing request.

The updated requirement parameter of the second sensing session may be determined as follows. The second functional entity takes the requirement parameter of the second sensing request as the updated requirement parameter of the second sensing session.

Optionally, the updated information of the second sensing session may further include the type parameter of the second sensing session. The type parameter of the second sensing session is the type parameter in the information of the second sensing session.

Optionally, the updated information of the second sensing session may further include the identifier of the second sensing session. The identifier of the second sensing session is the same as an identifier in the information of the second sensing session.

Herein, the new second sensing request is aggregated into the second sensing session. Therefore, the updated mapping relationship of the second sensing session eventually obtained includes the mapping relationship between the identifier of the second sensing session, the identifier of each first sensing request in the multiple first sensing requests, and the identifier of the second sensing request.

It can also be noted that, in the implementations, the second functional entity may receive the information of the second sensing request and further aggregate the second sensing request into the second sensing session either before the second functional entity receives a sensing result corresponding to any second sensing session, or after the second functional entity has received a sensing result of the second sensing session.

In some possible implementations, after the first functional entity sends the information of the first sensing task, the method may further include the following. The first functional entity receives the information of the second sensing session. The first functional entity determines the parameter corresponding to the second sensing session, based on the information of the second sensing session. When the first functional entity determines, based on the parameter corresponding to the second sensing session, that the second sensing session corresponds to a sensing device and a measurement type parameter same as the first sensing task, the first functional entity aggregates the second sensing session into the first sensing task

Possible contents contained in the information of the second sensing session are the same as those contained in the information of any second sensing session in the aforementioned embodiments, and will not be repeated herein. The second sensing session is sent by the second functional entity to the first functional entity. For the sake of maintaining consistency, in the implementations, the sensing session sent by the second functional entity is not differentiated in expression, but is uniformly referred to as the second sensing session.

It can be noted that an executing timing of the implementations is different from those of the aforementioned embodiments. The implementations protect a scenario where the first functional entity receives a new second sensing session again after the first functional entity sends the information of the first sensing task.

Processing for the first functional entity to determine the parameter corresponding to the second sensing session based on the information of the second sensing session is the same as those in the aforementioned embodiments, and will not be repeated herein.

In an embodiment, the first functional entity may aggregate the second sensing session into the first sensing task as follows. The first functional entity obtains the updated mapping relationship of the first sensing task, based on the identifier of the second sensing session. The updated mapping relationship of the first sensing task includes: the mapping relationship between the identifier of the first sensing task, the identifier of each first sensing session in the multiple first sensing sessions, and the identifier of the second sensing session.

In this case, the first functional entity may not update the information of the first sensing task, that is, the first functional entity may not need to send the information of the first sensing task again. The description of the information of the first sensing task is the same as that in the aforementioned embodiments, and will not be repeated herein.

In an embodiment, the first functional entity aggregates the second sensing session into the first sensing task as follows. When the reporting requirement parameter corresponding to the second sensing session is higher than that corresponding to the first sensing task, the first functional entity updates the information of the first sensing task based on the reporting requirement parameter corresponding to the second sensing session, to obtain updated information of the first sensing taskMeanwhile, the first functional entity may aggregate the second sensing session into the first sensing task as follows. The first functional entity obtains the updated mapping relationship of the first sensing task based on the identifier of the second sensing session.

After updating the information of the first sensing task based on the reporting requirement parameter corresponding to the second sensing session to obtain the updated information of the first sensing task, the first functional entity may further send the updated information of the first sensing task.

Optionally, the updated information of the first sensing task includes an updated reporting requirement parameter of the first sensing task. The updated reporting requirement parameter of the first sensing task is determined based on the reporting requirement parameter corresponding to the second sensing session.

The first functional entity may obtain the updated reporting requirement parameter of the first sensing task as follows. The first functional entity takes the reporting requirement parameter corresponding to the second sensing session as the updated reporting requirement parameter of the first sensing task.

Optionally, the updated information of the first sensing task may further include the measurement type parameter of the first sensing task. The measurement type parameter of the first sensing task is the same as the measurement type parameter in the information of the first sensing task, and will not be repeated.

Optionally, the updated information of the first sensing task further includes the identifier of the first sensing task. The identifier of the first sensing task is the same as an identifier in the information of the first sensing task, and will not be repeated.

In some possible implementations, after the sensing device receives the information of the first sensing task, the sensing device may further receive the updated information of the first sensing task. Specifically, the sensing device receives the updated information of the first sensing task as follows. The sensing device receives the updated information of the first sensing task sent by the first functional entity.

Furthermore, after the sensing device receives the information of the first sensing task, the sensing device may process as follows. The sensing device measures sensing data based on the updated information of the first sensing task, to obtain the measurement data corresponding to the first sensing task. The sensing device sends the measurement data corresponding to the first sensing task.

Herein, the sensing device may send the measurement data corresponding to the first sensing task as follows. The sensing device sends the identifier of the first sensing task and the measurement data corresponding to the first sensing task to the first functional entity.

In addition, after the sensing device receives the updated information of the first sensing task, and before the sensing device measures the sensing data based on the updated information of the first sensing task, the sensing device may further send an updated configuration response to the first functional entity. The updated configuration response is used to indicate the first functional entity that the sensing device is configured successfully based on the updated information of the first sensing task. Correspondingly, after the first functional entity sends the updated information of the first sensing task, the functional entity may further receive the updated configuration response sent by the sensing device.

It can also be noted that, before the sensing device receives the updated information of the first sensing task, the sensing device may have completed configuration and measurement of information of previous first sensing task, and has once reported a measurement result of the first sensing task. In this case, if the sensing device receives the updated information of the first sensing task, the sensing device will reconfigure and will re-perform the measurement according to the updated information of the first sensing task. Or, before the sensing device receives the updated information of the first sensing task, the sensing device may not have completed the measurement corresponding to any information of the first sensing task. In this case, if the sensing device receives the updated information of the first sensing task, the sensing device will reconfigure and will directly perform the measurement according to the updated information of the first sensing task.

In some possible implementations, after the first functional entity aggregates the second sensing session into the first sensing task, the method further includes the following. The first functional entity receives the measurement data corresponding to the first sensing task. The first functional entity sends the sensing result corresponding to each first sensing session in multiple first sensing sessions and the sensing result corresponding to the second sensing session. The sensing result corresponding to each first sensing session is determined based on the measurement data corresponding to the first sensing task and the reporting requirement parameter corresponding to each first sensing session. The sensing result corresponding to the second sensing session is determined based on the measurement data corresponding to the first sensing task and the reporting requirement parameter corresponding to the second sensing session.

Herein, since the first functional entity aggregates the second sensing session into the first sensing task, the information of the first sensing task may not be updated, and a mapping relationship of the first sensing task maintained locally by the first functional entity is changed. Therefore, in a possible example in the implementations, the first functional entity receives the measurement data corresponding to the first sensing task after the first functional entity aggregates the second sensing session into the first sensing task. In some possible examples, the information of the first sensing task is changed. In this case, in the implementations, the first functional entity receives the measurement data corresponding to the first sensing task after the first functional entity aggregates the second sensing session into the first sensing task and sends the updated information of the first sensing task.

The first functional entity may receive the measurement data corresponding to the first sensing task as follows. The first functional entity receives the measurement data corresponding to the first sensing task and the identifier of the first sensing task sent by the sensing device.

Correspondingly, the first functional entity may determine the sensing result corresponding to each first sensing session and the sensing result corresponding to the second sensing session as follows. The first functional entity determines the mapping relationship of the first sensing task based on the identifier of the first sensing task. The first functional entity determines the identifier of each first sensing session and the identifier of the second sensing session in the multiple first sensing sessions, based on the mapping relationship of the first sensing task. The first functional entity determines the reporting requirement parameter corresponding to each first sensing session and the reporting requirement parameter corresponding to the second sensing session, based on the identifier of each first sensing session and the identifier of the second sensing session. The first functional entity determines the sensing result corresponding to each first sensing session based on the measurement data corresponding to the first sensing task and the reporting requirement parameter corresponding to each first sensing session. The first functional entity determines the sensing result corresponding to the second sensing session based on the measurement data corresponding to the first sensing task and the reporting requirement parameter corresponding to the second sensing session.

The first functional entity may send the sensing result corresponding to each first sensing session in the multiple first sensing sessions and the sensing result corresponding to the second sensing session, as follows. The first functional entity sends the identifier of each first sensing session and the sensing result corresponding to the each first sensing session to the second functional entity. The first functional entity sends an identifier of each second sensing session and the sensing result corresponding to the each second sensing session.

In some possible implementations, after the second functional entity aggregates the second sensing request into the second sensing session, the method further includes the following. The second functional entity receives the sensing result corresponding to the second sensing session. The second functional entity sends the sensing result corresponding to each first sensing request in multiple first sensing requests and a sensing result corresponding to the second sensing request. The sensing result corresponding to each first sensing request is determined based on the sensing result corresponding to the second sensing session and a requirement parameter of each first sensing request. The sensing result corresponding to the second sensing request is determined based on the sensing result corresponding to the second sensing session and a requirement parameter of the second sensing request.

Since the second functional entity aggregates the second sensing request into the second sensing session, the information of the second sensing session may not be updated, and a mapping relationship of the second sensing task maintained locally by the second functional entity is changed. Therefore, in a possible example in the implementation, the second functional entity receives the sensing result corresponding to the second sensing session after the second functional entity aggregates the second sensing request into the second sensing session. In some possible examples, the information of the second sensing session is changed. In this case, in the implementations, the second functional entity may receive the sensing result corresponding to the second sensing session after the second functional entity aggregates the second sensing request into the second sensing session and sends the updated information of the second sensing session.

It can be noted herein that, after the second functional entity sends the information of the second sensing session to the first functional entity, the first functional entity determines that multiple first sensing sessions which have the same measurement type parameter and correspond to the same sensing device exist in the second sensing sessions, and generates the first sensing task based on the multiple first sensing sessions. Therefore, when the first functional entity reports the sensing result corresponding to any one of the first sensing sessions to the second functional entity, the second functional entity may correspond any one of the first sensing sessions to any one of the second sensing sessions.

Based on this, the second functional entity may receive the sensing result corresponding to the second sensing session as follows. The second functional entity receives the identifier of the first sensing session and the sensing result corresponding to the first sensing session sent by the first functional entity. The second functional entity takes the identifier of the first sensing session and the sensing result corresponding to the first sensing session, as the identifier of the second sensing session and the sensing result corresponding to the second sensing session.

Correspondingly, the second functional entity may determine the sensing result corresponding to each first sensing request and the sensing result corresponding to the second sensing request as follows. The second functional entity determines the mapping relationship of the second sensing session based on the identifier of the second sensing session. The second functional entity determines the identifier of each first sensing request in the multiple first sensing requests and the identifier of the second sensing request based on the mapping relationship of the second sensing session. The second functional entity determines the requirement parameter corresponding to each first sensing request based on the identifier of each first sensing request. The second functional entity determines a requirement parameter corresponding to the second sensing request based on the identifier of the second sensing request. The second functional entity determines the sensing result corresponding to each first sensing request based on the sensing result corresponding to the second sensing session and the requirement parameter corresponding to each first sensing request. The second functional entity determines the sensing result corresponding to the second sensing request based on the sensing result corresponding to the second sensing session and the requirement parameter corresponding to the second sensing request.

The second functional entity may send the sensing result corresponding to each first sensing request in the multiple first sensing requests and the sensing result corresponding to the second sensing request as follows. The second functional entity sends the identifier of each first sensing request, the sensing result corresponding to each first sensing request, the identifier of the second sensing request, and the sensing result corresponding to the second sensing request to the first network function.

In general, the communication method provided in the embodiments mainly performs a multi-level aggregation on the sensing service according to sensing requirement parameter and the like. The solution is outlined as follows. First, aggregation is performed based on parameter requirements according to the sensing requirement parameter, that is, multiple sensing requirements with similar requirement parameters are aggregated into one sensing session for configuration, according to the most stringent requirement parameter. When a sensing node is configured, a sensing session with the most stringent requirement parameter is selected according to requirements of multiple sensing sessions, to formulate parameter configuration, and sensing sessions are aggregated into one sensing task and then assigned to the sensing node. Sensing data is uploaded, which will subsequently be restored as multiple sensing sessions and sensing requests by a network elements such as a sensing function (SF), a gateway mobile location center (GMLC), etc. according to the mapping relationship. A sensing result is fed back.

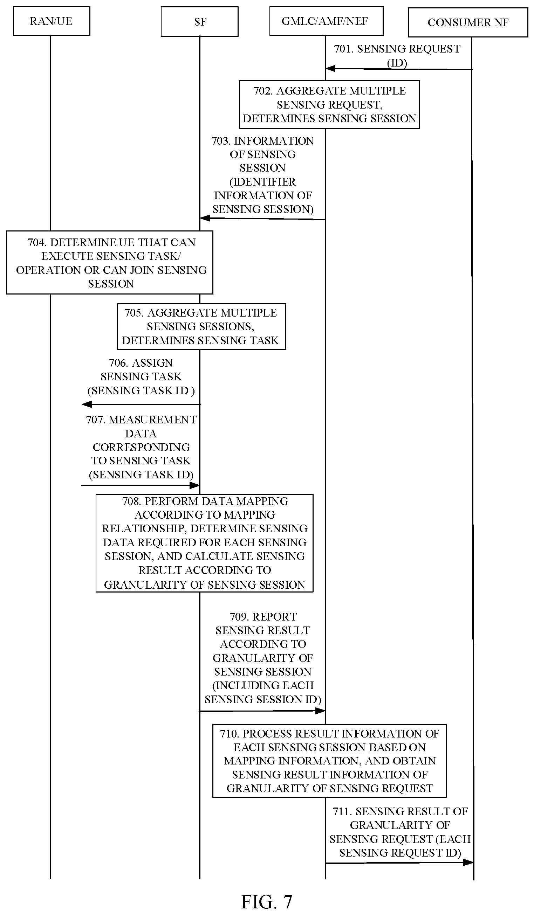

With reference to FIG. 7, a sensing device includes a user equipment (UE) and/or radio access network (RAN) (illustrated as UE/RAN in FIG. 7), a first functional entity is a sensing function (SF), a second functional entity includes at least one of a gateway mobile location center (GMLC)/ an access and mobility management function (AMF)/ a network exposure function (NEF), and a first network function (NF) (illustrated as a consumer NF in FIG. 7). The aforementioned communication method is exemplary implemented as follows.

Step 701: A first network element (which may be GMLC/AMF/NEF) receives a sensing request sent by the consumer NF. The sensing request includes information of a sensing task/business/session. The information of the sensing task/bussiness/session may include information of the sensing target (such as a region, a target UE, a target object characteristic, etc.) and may also include information of requirement of sensing service. The information of requirement of sensing service includes a requested sensing method (such as UE sensing, base station sensing, UE-base station collaborative sensing, etc.) and/or a sensing service type (also referred to as sensing scenario, such as object detection and tracking, environment monitoring, motion monitoring, etc.), a sensing service level (different sensing scenarios or use cases may correspond to different level), a sensing area or sensing region (such as indoor or outdoor, area size of a region, a sensing target type, etc.), a confidence level (reliability of a sensing result), an accuracy of positioning estimate (including a horizontal positioning accuracy and a vertical positioning accuracy, in units such as meters/decimeters/centimeters, etc.), an accuracy of velocity estimate (including a horizontal velocity accuracy and a vertical velocity accuracy), a sensing resolution (such as a range resolution and a velocity resolution, etc.), a maximum sensing service latency, a refresh rate (such as refreshing 10 times per second, etc.), a missed detection rate, a false alarm rate, etc. The information of the sensing task/operation/session may also include information of identifier of the sensing request, such as a transaction identification (ID), a notification target address, a notification correlation ID, a client ID, etc. Herein, the sensing request in this step may be any one of the second sensing requests in the aforementioned embodiments.

Step 702: The first network element (GMLC/AMF/NEF) aggregates multiple sensing requests, aggregates sensing requests of the same type, and determines a sensing session. For example, classification is performed according to the following parameters: the sensing scenario, the sensing area, the sensing target, the sensing method, the sensing service type, and the sensing service level (sensing requests with one or more of the aforementioned parameters being the same are aggregated). Specifically, an aggregated sensing request can be referred to as a sensing session (or can also be referred to as other names, such as sensing service, sensing service, etc.). For other sensing requirement parameters of the sensing session, such as the confidence level, the accuracy of positioning estimate (including the horizontal positioning accuracy and the vertical positioning accuracy), the accuracy of velocity estimate (including the horizontal velocity accuracy and the vertical velocity accuracy), the sensing resolution (such as the range resolution and the velocity resolution, etc.), the maximum sensing service latency, the refresh rate, the missed detection rate, the false alarm rate, etc., the most stringent sensing requirement parameter of the aggregated sensing request can be taken as the sensing requirement parameter of the sensing session.

In an example, aggregating performed by the first network element may be as follows. Multiple sensing requests are received within a period of time, only one sensing session is generated, and a sensing session ID is assigned. Herein, the sensing session can be a second sensing session in the aforementioned embodiments.

In an example, aggregating performed by the first network element may also be as follows. First, a sensing request is received and a sensing session is generated. After the sensing session ID is assigned, other sensing request that can be aggregated arrives subsequently during the execution of the sensing session. The new sensing request is aggregated into the current sensing session, and the same sensing session ID is used. The current sensing session may be updated according to subsequent sensing requirement parameter.

After this step is completed, the first network element maintains a mapping relationship between a sensing request(s) and a sensing session(s), that is, the mapping relationship of any second sensing session in the aforementioned embodiments. The mapping relationship includes a mapping relationship between the identifier of multiple sensing requests and the identifier of the sensing session.

Step 703: The first network element (GMLC/AMF/NEF) sends information of the aggregated sensing sessions to the SF, which carries information of the sensing parameter (such as the sensing scenario, the sensing area, the accuracy of positioning estimate, etc.) and also carries identifier information of the sensing session. The identifier information of the sensing session can be in a form of sensing session ID, correlation ID, etc. Herein, the sensing session may be the second sensing session in the aforementioned embodiments.

Step 704: The SF identifies (discovers) a corresponding UE device (which may refer to a candidate sensing device or a candidate sensing node) according to information of a target of each sensing session (i.e., a sensing target). Specifically, a UE device may be identified by querying other network elements such as AMF/UDR/UDM, etc., or by querying local information, and is not limited herein. The SF determines a UE that can perform the sensing task/bussiness or can join the sensing session, based on the identified UE device and sensing capability information of the identified UE device, etc. Herein, the UE that can perform the sensing task/bussiness or can join in the sensing session may refer to the sensing device (or the sensing node).

Step 705: The SF aggregates multiple sensing sessions based on the information of the sensing session received in step 703, aggregates the sensing sessions performed by the same node, and determines the sensing task (i.e., the first sensing task in the aforementioned embodiments).

For example, aggregating can be performed based on measurement reporting information (i.e., measurement type information in the aforementioned embodiments), such as a data type reported by the node (e.g., point cloud information, channel estimation information, Doppler information, etc.), a reference signal for using (e.g., a positioning reference signal (PRS) sent by a base station A, etc.), a reporting requirement (e.g., a reporting frequency such as 10 times per second, etc., a reporting latency-requirement such as 10ms, etc.), a reliability, a packet-loss rate, and a bandwidth. Sensing sessions with the same measurement reporting information and the most stringent reporting requirement parameter are selected for aggregation.

In an example, the SF aggregates the sensing session as follows. The SF receives multiple sensing session requests within a period of time, generates only one sensing task (which can also be referred to as a sensing node configuration message) and assigns a sensing task ID.

In an example, the SF aggregates the sensing session as follows. The SF may first receive a sensing session request and generate a sensing task. After the sensing task ID is assigned, if other sensing request that can be aggregated arrives subsequently during the execution of the sensing task, the new sensing session request is aggregated into the current sensing task, and the same sensing task ID is used. The current sensing task may be updated according to a requirement parameter of subsequent sensing session.

After this step is completed, the SF maintains a mapping relationship between multiple sensing sessions and the sensing task. That is, the SF can maintain a mapping relationship of the sensing task (i.e., the mapping relationship of the first sensing task in the aforementioned embodiments), which includes a mapping relationship between the sensing task ID and multiple sensing session IDs.

It can be noted that, measurement reporting information of the sensing task and a measurement reporting requirement of the sensing task (i.e., a measurement type parameter and a reporting requirement parameter in the aforementioned embodiments) may be collectively referred to as measurement reporting requirement information of the sensing task. That is, measurement reporting requirement information simultaneously includes the data type reported by the node, the reference signal for using, the reporting frequency, the reporting latency-requirement, etc. However, regardless of whether it is called the measurement and reporting requirement information of the sensing task, or the measurement reporting information and measurement reporting requirement of the sensing task, content essentially contained in any parameter and the function thereof are the same as those described in the aforementioned embodiments.

Step 706: The SF assigns the sensing requirement to the sensing node (UE/RAN). The sensing requirement includes one or more of sensing task IDs, information of the sensing task (i.e., the information of the first sensing task in the aforementioned embodiments), such as the data type reported by the node, the reference signal for using, the reporting frequency, the reporting latency-requirement, etc.

Step 707: After the sensing node (UE/RAN) receives the sensing task (i.e., the information of the first sensing task in the aforementioned embodiments), the sensing node (UE/RAN) measures sensing data, and sends measurement data corresponding to the sensing task to the SF, such as sending a message containing the sensing task ID and corresponding measurement data.

Step 708: The SF performs data mapping according to the mapping relationship generated in step 705, determines sensing data required for each sensing session, and calculates a sensing result according to a granularity of the sensing session, to obtain a sensing result corresponding to each sensing session.

Step 709: The SF reports a generated sensing result to the first network element (GMLC/AMF/NEF) according to the granularity of the sensing session (i.e., the sensing result corresponding to each sensing session). The sensing result includes ID information of each sensing session and the sensing result corresponding to each sensing session.

Step 710: The first network element (GMLC/AMF/NEF) processes result information of each sensing session based on mapping information maintained in step 702, and obtains sensing result information of a granularity of the sensing request . For example, the sensing result of the same sensing session is processed in different notification formats according to the requirements of multiple sensing requests. For instance, sensing request 1 requires reporting every 10 seconds, and sensing request 2 requires reporting every 1 second, the sensing result obtained by the first network element may be generated every 1 second. In this case, the result may be reported every 1 second for sensing request 2, while for sensing request 1, the result may be aggregated or left unprocessed and reported every 10 seconds.

Step 711: The first network element (GMLC/AMF/NEF) sends the sensing result of the granularity of the sensing request to the consumer NF. The sensing result includes a sensing request ID and a corresponding sensing result.

In existing solutions, there is a one-to-one mapping relationship for all sensing requests, that is, an independent sensing session and an idepemdent sensing task is genenrated for each sensing request. This leads to significant resource waste and results in a low network sensing service capacity. The communication method provided in the disclosure employs a two-level aggregation scheme, can simultaneously serve multiple sensing requests by using the same sensing spectrum resources and the same data transmission resources, thereby increasing a capacity of sensing service and saving resources.

By adopting the scheme provided in the aforementioned embodiments, the first functional entity sends the first sensing task related to multiple first sensing sessions, and the sensing device can simultaneously measure to obtain a measurement result that can be used by multiple sensing sessions. In this way, a problem of resource waste, caused by assigning a sensing task for each sensing session and performing measurement for each sensing session by the sensing device, can be avoided, and more sensing service can be supported while saving resources.

In addition, any sensing session sent by the second functional entity is also related to multiple sensing requests. In this way, the sensing task sent by the first functional entity can be a sensing task obtained after two-level aggregation, which further ensures that the sensing device can obtain, through simultaneous measurement, the measurement result that can be used by multiple sensing requests, guarantees that the sensing service can serve multiple sensing sessions and multiple sensing requests simultaneously, thereby increasing a capacity of the sensing service and saving resources.

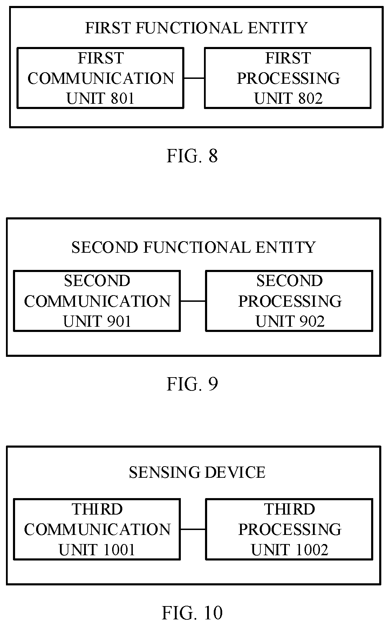

FIG. 8 is a schematic structural diagram of a first functional entity according to an embodiment of the disclosure. As illustrated in FIG. 8, the first functional entity includes a first communication unit 801 configured to send information of a first sensing task. The first sensing task is related to multiple first sensing sessions.

The information of the first sensing task includes a measurement type parameter of the first sensing task. The measurement type parameter of the first sensing task is a measurement type parameter shared by the multiple first sensing sessions.

The information of the first sensing task includes a reporting requirement parameter of the first sensing task. The reporting requirement parameter of the first sensing task is determined based on a reporting requirement parameter corresponding to each first sensing session in the multiple first sensing sessions.

The reporting requirement parameter of the first sensing task is the most stringent reporting requirement parameter in reporting requirement parameters each corresponding to one first sensing session.

The information of the first sensing task further includes an identifier of the first sensing task.

As illustrated in FIG. 8, the first functional entity further includes a first processing unit 802. The first processing unit is configured to store a mapping relationship of the first sensing task. The mapping relationship of the first sensing task includes a mapping relationship between the identifier of the first sensing task and an identifier of each first sensing session in the multiple first sensing sessions.

The first communication unit is configured to receive measurement data corresponding to the first sensing task. The first communication unit is configured to send a sensing result corresponding to each first sensing session in the multiple first sensing sessions. The sensing result corresponding to each first sensing session is determined based on the measurement data corresponding to the first sensing task and the reporting requirement parameter corresponding to each first sensing session.

The first processing unit is configured to determine a parameter corresponding to each second sensing session based on the information of each second sensing session in the multiple second sensing sessions. The first processing unit is configured to determine the multiple first sensing sessions based on multiple second sensing sessions which correspond to the same sensing device and have the same measurement type parameter, when the first processing unit determines, based on the parameter corresponding to each second sensing session, that the multiple second sensing sessions which correspond to the same sensing device and have the same measurement type parameter exist in the multiple second sensing sessions. The first communication unit is configured to receive information of each second sensing session in the multiple second sensing sessions.

The first communication unit is configured to receive information of the second sensing session. The first processing unit is configured to determine a parameter corresponding to the second sensing session based on the information of the second sensing session. The first processing unit is configured to aggregate the second sensing session into the first sensing task when the first processing unit determines, based on the parameter corresponding to the second sensing session, that the second sensing session corresponds to a sensing device and a measurement type parameter same as the first sensing task.

The first processing unit is configured to obtain an updated mapping relationship of the first sensing task based on the identifier of the second sensing session. The updated mapping relationship of the first sensing task includes a mapping relationship between the identifier of the first sensing task, the identifier of each first sensing session in the multiple first sensing sessions, and the identifier of the second sensing session.

The first processing unit is configured to update the information of the first sensing task based on a reporting requirement parameter corresponding to the second sensing session, to obtain updated information of the first sensing task, when the reporting requirement parameter corresponding to the second sensing session is higher than that of the first sensing task.

The first communication unit is configured to send the updated information of the first sensing task.

The first communication unit is configured to receive measurement data corresponding to the first sensing task. The first communication unit is configured to send a sensing result corresponding to each first sensing session in the multiple first sensing sessions and a sensing result corresponding to the second sensing session. The sensing result corresponding to each first sensing session is determined based on the measurement data corresponding to the first sensing task and the reporting requirement parameter corresponding to each first sensing session. The sensing result corresponding to the second sensing session is determined based on the measurement data corresponding to the first sensing task and the reporting requirement parameter corresponding to the second sensing session.

The parameters corresponding to the second sensing session include at least one of: the identifier of the second sensing session, the sensing device corresponding to the second sensing session, the measurement type parameter corresponding to the second sensing session, and the reporting requirement parameter corresponding to the second sensing session.

The sensing device includes at least one of: a terminal, and an access network (AN) device.

The second sensing session is related to multiple first sensing requests.

The information of the second sensing session includes a type parameter of the second sensing session. The type parameter of the second sensing session is a type parameter shared by the multiple first sensing requests.

The information of the second sensing session includes a requirement parameter of the second sensing session, and the requirement parameter of the second sensing session is determined based on a requirement parameter of each first sensing request in the multiple first sensing requests.

The information of the second sensing session includes the identifier of the second sensing session.

The type parameter includes at least one of: a sensing scenario, a sensing area, a sensing target, a sensing method, a sensing service type, and a sensing service level.

The requirement parameter includes at least one of: a confidence level, an accuracy of positioning estimate, an accuracy of velocity estimate, a sensing resolution, a maximum sensing service latency, a refresh rate, a missed detection rate, and a false alarm rate.

The measurement type parameter includes at least one of: a data type to be reported, and a reference signal used for measuring.

The reporting requirement parameter includes at least one of: a reporting frequency, a reporting latency-requirement, a reporting reliability, a reporting packet-loss rate, and a reporting bandwidth.

The first functional entity is deployed in a sensing function (SF).

FIG. 9 is a schematic structural diagram of a second functional entity according to an embodiment of the disclosure. As illustrated in FIG. 9, the second functional entity includes a second communication unit 901 configured to send information of the second sensing session. The second sensing session is related to multiple first sensing requests.

The information of the second sensing session includes a type parameter of the second sensing session. The type parameter of the second sensing session is a type parameter shared by the multiple first sensing requests.

The information of the second sensing session includes a requirement parameter of the second sensing session. The requirement parameter is determined based on a requirement parameter of each first sensing request in the multiple first sensing requests.

The requirement parameter of the second sensing session is the most stringent requirement parameter in requirement parameters each corresponding to one first sensing request.

The information of the second sensing session includes an identifier of the second sensing session.

As illustrated in FIG. 9, the second functional entity further includes a second processing unit 902. The second processing unit is configured to store a mapping relationship of the second sensing session. The mapping relationship of the second sensing session includes a mapping relationship between the identifier of the second sensing session and an identifier of each first sensing request in the multiple first sensing requests.

The second communication unit is configured to receive a sensing result corresponding to the second sensing session. The second communication unit is configured to send a sensing result corresponding to each first sensing request in the multiple first sensing requests. The sensing result corresponding to each first sensing request is determined based on the sensing result corresponding to the second sensing session and the requirement parameter of each first sensing request.

The second communication unit is configured to receive information of each second sensing request in the multiple second sensing requests. The second processing unit is configured to determine the multiple first sensing requests based on multiple second sensing requests with the same type parameter, when the second processing unit determines, based on the information of each second sensing request, that the multiple second sensing requests with the same type parameter exist in the multiple second sensing requests.

The second communication unit is configured to receive information of the second sensing request. The second processing unit is configured to aggregate the second sensing request into the second sensing session, when the second processing unit determines, based on the information of the second sensing request, that a type parameter of the second sensing request is the same as that of the second sensing session.

The second processing unit is configured to obtain an updated mapping relationship of the second sensing session based on an identifier of the second sensing request. The updated mapping relationship of the second sensing session includes a mapping relationship between the identifier of the second sensing session, the identifier of each first sensing request in the multiple first sensing requests, and the identifier of the second sensing request.

The second processing unit is configured to update the information of the second sensing session based on a requirement parameter of the second sensing request, to obtain the updated information of the second sensing session, when the second processing unit determines, based on the information of the second sensing request, that the requirement parameter of the second sensing request is higher than that of the second sensing session.

The second communication unit is configured to send the updated information of the second sensing session.

The second communication unit is configured to receive the sensing result corresponding to the second sensing session. The second communication unit is configured to send the sensing result corresponding to each first sensing request in multiple first sensing requests and a sensing result corresponding to the second sensing request. The sensing result corresponding to each first sensing request is determined based on the sensing result corresponding to the second sensing session and the requirement parameter of each first sensing request. The sensing result corresponding to the second sensing request is determined based on the sensing result corresponding to the second sensing session and the requirement parameter of the second sensing request.

The type parameter includes at least one of: a sensing scenario, a sensing area, a sensing target, a sensing method, a sensing service type, and a sensing service level.

The requirement parameter includes at least one of: a confidence level, an accuracy of positioning estimate, an accuracy of velocity estimate, a sensing resolution, a maximum sensing service latency, a refresh rate, a missed detection rate, and a false alarm rate.

The second functional entity is deployed in at least one of: an access and mobility management function (AMF), a network exposure function (NEF), a gateway mobile location center (GMLC), and a sensing function (SF).

FIG. 10 is a schematic structural diagram of a sensing device according to an embodiment of the disclosure. As illustrated in FIG. 10, the sensing device includes a third communication unit 1001 configured to receive information of a first sensing task. The first sensing task is related to multiple first sensing sessions.

As illustrated in FIG. 10, the sensing device further includes a third processing unit 1002. The third processing unit is configured to measure sensing data based on the information of the first sensing task, to obtain measurement data corresponding to the first sensing task. The third communication unit is configured to send the measurement data corresponding to the first sensing task.

The third communication unit is configured to receive updated information of the first sensing task.

The third processing unit is configured to measure sensing data based on the updated information of the first sensing task, to obtain the measurement data corresponding to the first sensing task. The third communication unit is configured to send the measurement data corresponding to the first sensing task.

The sensing device includes at least one of: a terminal, and an access network (AN) device.

The devices in the embodiments of the disclosure can implement corresponding functions of the devices in the aforementioned embodiments of the communication method. For a process, a function, an implementation, and a beneficial effect corresponding to each module (a sub-module, a unit, or a component, etc.) in the first functional entity, the second functional entity, or the sensing device, reference may be made to the corresponding descriptions in the aforementioned method embodiments of the disclosure, which will not be repeated herein. It can be noted that, functions described by each module (sub-module, unit, or component, etc.) in the first functional entity, the second functional entity, or the sensing device in the embodiments of the disclosure may be implemented by different modules (sub-modules, units, or components, etc.), or may be implemented by the same module (sub-module, unit, or component, etc.).

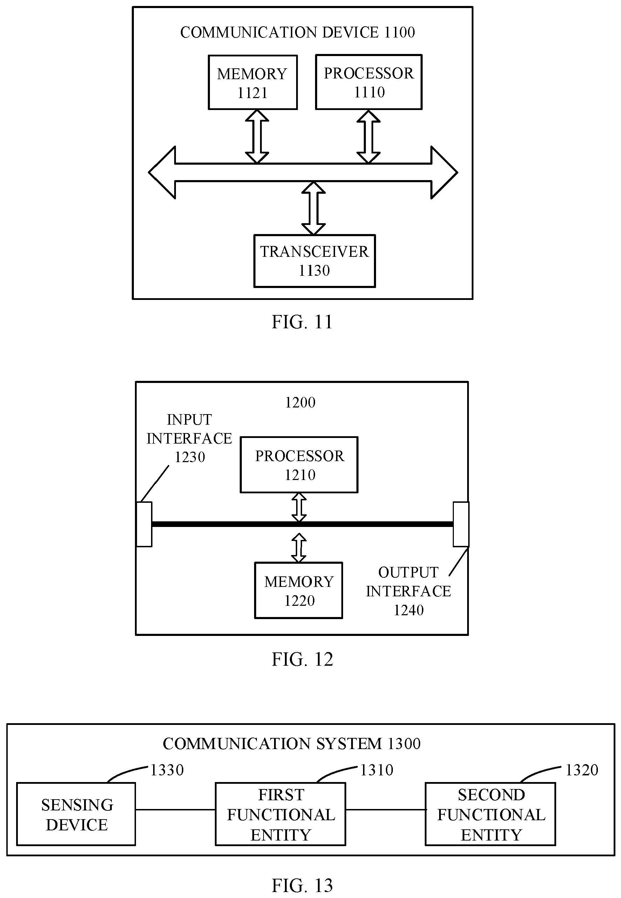

FIG. 11 is a schematic structural diagram of a communication device 1100 according to embodiments of the disclosure. The communication device 1100 includes a processor 1110, which can invoke and execute a computer program stored in a memory, to cause the communication device 1100 to implement the methods in the embodiments of the disclosure. In a possible implementation, the communication device 1100 may further include a memory 1120. The processor 1110 can invoke and execute a computer program stored in the memory 1120, to cause the communication device 1100 to implement the methods in the embodiments of the disclosure. The memory 1120 may be a separate component independent of the processor 1110, or may be integrated in the processor 1110. In a possible implementation, the communication device 1100 may further include a transceiver 1130. The processor 1110 can control the transceiver 1130 to communicate with other devices, specifically, to send information or data to other devices, or to receive information or data sent by other devices. The transceiver 1130 may include a transmitter and a receiver. The transceiver 1130 may further include an antenna, where one or more antennas can be provided.

In a possible implementation, the communication device 1100 may be the first functional entity, the second functional entity, or the sensing device in embodiments of the disclosure, and the communication device 1100 can implement the corresponding processes implemented by the first functional entity, the second functional entity, or the sensing device in each method in embodiments of the disclosure, which will not be repeated herein for the sake of simplicity.

FIG. 12 is a schematic structural diagram of a chip 1200 according to embodiments of the disclosure. The chip 1200 includes a processor 1210, which can invoke and execute a computer program from a memory, to implement the methods in the embodiments of the disclosure. In a possible implementation, the chip 1200 may further include a memory 1220. The processor 1210 can invoke and execute a computer program from the memory 1220, to implement the methods executed by a first device or a target second device in the embodiments of the disclosure. The memory 1220 can be a separate component independent of the processor 1210, or can be integrated in the processor 1210. In a possible implementation, the chip 1200 may further include an input interface 1230. The processor 1210 can control the input interface 1230 to communicate with other devices or chips, and specifically, to obtain information or data sent by other devices or chips. In a possible implementation, the chip 1200 may further include an output interface 1240. The processor 1210 can control the output interface 1240 to communicate with other devices or chips, and specifically, to output information or data to other devices or chips.

In a possible implementation, the chip can be applied to the first functional entity, the second functional entity, or the sensing device in embodiments of the disclosure, and the chip can implement the corresponding processes in each method in embodiments of the disclosure that are implemented by the first functional entity, the second functional entity, or the sensing device, which will not be repeated herein for the sake of simplicity. It can be understood that the chip in embodiments of the disclosure may also be referred to as a system-on-chip (SOC), a system chip, a chip system, or system on chip, etc. The aforementioned processor may be a general-purpose processor, a digital signal processor (DSP), an field programmable gate array (FPGA), an application specific integrated circuit (ASIC), or other programmable logic devices, transistor logic devices, discrete hardware components, etc. The aforementioned general-purpose processor may be a microprocessor or any conventional processor, etc. The aforementioned memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM). It can be understood that the aforementioned memory is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the disclosure is intended to include, but is not limited to, these and any other suitable types of memory.

FIG. 13 is a schematic block diagram of a communication system 1300 according to embodiments of the disclosure. This communication system 1300 includes a first functional entity 1310, a second functional entity 1320, and a sensing device 1330. The first functional entity 1310 can be used to implement the corresponding functions implemented by the first functional entity in the aforementioned methods. The second functional entity 1320 can be used to implement the corresponding functions implemented by the second functional entity in the aforementioned methods. The sensing device 1330 can be used to implement the corresponding functions implemented by the sensing device in the aforementioned methods, which will not be repeated herein for the sake of simplicity.

All or some of the aforementioned embodiments can be implemented through a software, a hardware, a firmware, or any other combination thereof. When implemented by software, all or some the aforementioned embodiments can be implemented in the form of a computer program product. The computer program product includes one or more computer instructions. When the computer instructions are applied and executed on a computer, all or some operations or functions of the embodiments of the disclosure are generated. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner (such as a coaxial cable, an optical fiber, a digital subscriber line (DSL)) or in a wireless manner (such as infrared, wireless, microwave, etc.). The computer-readable storage medium can be any computer accessible usable-medium or a data storage device such as a server, a data center, or the like which integrates one or more usable media. The usable medium can be a magnetic medium (such as a soft disk, a hard disk, and a magnetic tape), an optical medium (such as a digital video disc (DVD)), or a semiconductor medium (such as a solid state disk (SSD)), etc.

It can be understood that, in various embodiments of the disclosure, a magnitude of a sequence number of each of the aforementioned procedures does not mean an execution order, and an execution order of each procedure can be determined according to a function and an internal logic of the procedure, which shall not constitute any limitation to an implementation procedure of embodiments of the disclosure. It will be evident to those skilled in the art that, for the sake of convenience and simplicity, in terms of the specific working procedures of the aforementioned systems, apparatuses, and units, reference can be made to the corresponding procedures in the aforementioned method embodiments, which will not be repeated herein. The aforementioned elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
sending, by a first functional entity, information of a first sensing task, wherein the first sensing task is related to a plurality of first sensing sessions.

2. The method of claim 1, wherein the information of the first sensing task comprises a measurement type parameter of the first sensing task, and the measurement type parameter of the first sensing task is a measurement type parameter shared by the plurality of first sensing sessions.

3. The method of claim 1 or 2, wherein the information of the first sensing task comprises a reporting requirement parameter of the first sensing task, and the reporting requirement parameter of the first sensing task is determined based on a reporting requirement parameter corresponding to each first sensing session in the plurality of first sensing sessions.

4. The method of claim 3, wherein the reporting requirement parameter of the first sensing task is a most stringent reporting requirement parameter in reporting requirement parameters each corresponding to one first sensing session.

5. The method of any one of claims 2 to 4, wherein the information of the first sensing task further comprises an identifier of the first sensing task.

6. The method of claim 5, further comprising:
storing, by the first functional entity, a mapping relationship of the first sensing task, wherein the mapping relationship of the first sensing task comprises a mapping relationship between the identifier of the first sensing task and an identifier of each first sensing session in the plurality of first sensing sessions.

7. The method of any one of claims 1 to 6, wherein after sending, by the first functional entity, the information of the first sensing task, the method further comprises:
receiving, by the first functional entity, measurement data corresponding to the first sensing task; and
sending, by the first functional entity, a sensing result corresponding to each first sensing session in the plurality of first sensing sessions, wherein the sensing result corresponding to each first sensing session is determined based on the measurement data corresponding to the first sensing task and the reporting requirement parameter corresponding to each first sensing session.

8. The method of any one of claims 1 to 7, wherein before sending, by the first functional entity, the information of the first sensing task, further comprises:
receiving, by the first functional entity, information of each second sensing session in a plurality of second sensing sessions;
determining, by the first function entity, a parameter corresponding to each second sensing session, based on the information of each second sensing session in the plurality of second sensing sessions; and
determining, by the first functional entity, the plurality of first sensing sessions, based on a plurality of second sensing sessions which correspond to a same sensing device and have a same measurement type parameter, in response to the first functional entity determining, based on the parameter corresponding to each second sensing session, that the plurality of second sensing sessions which correspond to the same sensing device and have the same measurement type parameter, exist in the plurality of second sensing sessions.

9. The method of any one of claims 1 to 7, wherein after sending, by the first functional entity, the information of the first sensing task, further comprises:
receiving, by the first functional entity, information of a second sensing session; determining, by the first functional entity, a parameter corresponding to the second sensing session, based on the information of the second sensing session; and
aggregating, by the first functional entity, the second sensing session into the first sensing task, in response to the first functional entity determining, based on the parameter corresponding to the second sensing session, that the second sensing session corresponds to a sensing device and a measurement type parameter same as the first sensing task.

10. The method of claim 9, wherein aggregating, by the first functional entity, the second sensing session into the first sensing task, comprises:
obtaining, by the first functional entity, an updated mapping relationship of the first sensing task, based on an identifier of the second sensing session, wherein the updated mapping relationship of the first sensing task comprises a mapping relationship between an identifier of the first sensing task, an identifier of each first sensing session in the plurality of first sensing sessions, and the identifier of the second sensing session.

11. The method of claim 10, wherein aggregating, by the first functional entity, the second sensing session into the first sensing task, comprises:
updating, by the first functional entity, information of the first sensing task, based on a reporting requirement parameter corresponding to the second sensing session, to obtain updated information of the first sensing task, in response to the reporting requirement parameter corresponding to the second sensing session being higher than that of the first sensing task.

12. The method of claim 11, further comprising:
sending, by the first functional entity, the updated information of the first sensing task.

13. The method of any one of claims 10 to 12, wherein after aggregating, by the first function entity, the second sensing session into the first sensing task, the method further comprises:
receiving, by the first functional entity, measurement data corresponding to the first sensing task; and
sending, by the first functional entity, a sensing result corresponding to each first sensing session in the plurality of first sensing sessions and a sensing result corresponding to the second sensing session, wherein the sensing result corresponding to each first sensing session is determined based on the measurement data corresponding to the first sensing task and a reporting requirement parameter corresponding to each first sensing session, and the sensing result corresponding to the second sensing session is determined based on the measurement data corresponding to the first sensing task and the reporting requirement parameter corresponding to the second sensing session.

14. The method of any one of claims 9 to 13, wherein the parameter corresponding to the second sensing session comprise at least one of: the identifier of the second sensing session, a sensing device corresponding to the second sensing session, a measurement type parameter corresponding to the second sensing session, and the reporting requirement parameter corresponding to the second sensing session.

15. The method of any one of claims 9 to 14, wherein a sensing device comprises at least one of: a terminal and an access network (AN) device.

16. The method of any one of claims 9 to 15, wherein the second sensing session is related to a plurality of first sensing requests.

17. The method of claim 16, wherein information of the second sensing session comprises a type parameter of the second sensing session, and the type parameter of the second sensing session is a type parameter shared by the plurality of first sensing requests.

18. The method of claim 16 or 17, wherein the information of the second sensing session comprises a requirement parameter of the second sensing session, and the requirement parameter of the second sensing session is determined based on a requirement parameter of each first sensing request in the plurality of first sensing requests.

19. The method of any one of claims 16 to 18, wherein the information of the second sensing session comprises an identifier of the second sensing session.

20. The method of claim 17, wherein a type parameter comprises at least one of: a sensing scenario, a sensing area, a sensing target, a sensing method, a sensing service type, and a sensing service level.

21. The method of claim 18, wherein a requirement parameter comprises at least one of: a confidence level, an accuracy of positioning estimate, an accuracy of velocity estimate, a sensing resolution, a maximum sensing service latency, a refresh rate, a missed detection rate, and a false alarm rate.

22. The method of any one of claim 2 and claims 9 to 21, wherein a measurement type parameter comprises at least one of: a data type to be reported, and a reference signal used for measuring.

23. The method of any one of claims 3, 4, 7, 11, 13, and 14, wherein a reporting requirement parameter comprises at least one of: a reporting frequency, a reporting latency-requirement, a reporting reliability, a reporting packet-loss rate, and a reporting bandwidth.

24. The method of any one of claims 1 to 23, wherein the first functional entity is deployed in a sensing function (SF).

25. A communication method, comprising:
sending, by a second functional entity, information of a second sensing session, wherein the second sensing session is related to a plurality of first sensing requests.

26. The method of claim 25, wherein the information of the second sensing session comprises a type parameter of the second sensing session, and the type parameter of the second sensing session is a type parameter shared by the plurality of first sensing requests.

27. The method of claim 25 or 26, wherein the information of the second sensing session comprises a requirement parameter of the second sensing session, and the requirement parameter of the second sensing session is determined based on a requirement parameter of each first sensing request in the plurality of first sensing requests.

28. The method of claim 27, wherein the requirement parameter of the second sensing session is a most stringent requirement parameter in requirement parameters each corresponding to one first sensing request.

29. The method of any one of claims 26 to 28, wherein the information of the second sensing session comprises an identifier of the second sensing session.

30. The method of claim 29, further comprising:
storing, by the second functional entity, a mapping relationship of the second sensing session, wherein the mapping relationship of the second sensing session comprises a mapping relationship between the identifier of the second sensing session and an identifier of each first sensing request in the plurality of first sensing requests.

31. The method of any one of claims 25 to 30, wherein after sending, by the second functional entity, the information of the second sensing session, the method further comprises:
receiving, by the second functional entity, a sensing result corresponding to the second sensing session; and
sending, by the second functional entity, a sensing result corresponding to each first sensing request in the plurality of first sensing requests, wherein the sensing result corresponding to each first sensing request is determined based on the sensing result corresponding to the second sensing session and the requirement parameter of each first sensing request.

32. The method of any one of claims 25 to 31, wherein before sending, by the second functional entity, the information of the second sensing session, further comprises:
receiving, by the second functional entity, information of each second sensing request in a plurality of second sensing requests; and
determining, by the second functional entity, the plurality of first sensing requests, based on a plurality of second sensing requests with a same type parameter, in response to the second functional entity determining, based on the information of each second sensing request, that the plurality of second sensing requests with the same type parameter, exist in the plurality of second sensing requests.

33. The method of any one of claims 25 to 31, wherein after sending, by the second functional entity, the information of the second sensing session, further comprises:
receiving, by the second functional entity, information of the second sensing request; and aggregating, by the second functional entity, the second sensing request into the second sensing session, in response to determining, based on the information of the second sensing request, that a type parameter of the second sensing request is the same as that of the second sensing session.

34. The method of claim 33, wherein aggregating, by the second functional entity, the second sensing request into the second sensing session, comprises:
obtaining, by the second functional entity, an updated mapping relationship of the second sensing session, based on an identifier of the second sensing request, wherein the updated mapping relationship of the second sensing session comprises a mapping relationship between an identifier of the second sensing session, an identifier of each first sensing request in the plurality of first sensing requests, and the identifier of the second sensing request.

35. The method of claim 34, wherein aggregating, by the second functional entity, the second sensing request into the second sensing session, comprises:
updating, by the second functional entity, information of the second sensing session, based on a requirement parameter of the second sensing request, to obtain updated information of the second sensing session, in response to the second functional entity determining, based on information of the second sensing request, that the requirement parameter of the second sensing request is higher than that of the second sensing session.

36. The method of claim 35, further comprising:
sending, by the second functional entity, the updated information of the second sensing session.

37. The method of any one of claims 33 to 36, wherein after aggregating, by the second functional entity, the second sensing request into the second sensing session, the method further comprises:
receiving, by the second functional entity, a sensing result corresponding to the second sensing session; and
sending, by the second functional entity, a sensing result corresponding to each first sensing request in a plurality of first sensing requests and a sensing result corresponding to the second sensing request, wherein the sensing result corresponding to each first sensing request is determined based on the sensing result corresponding to the second sensing session and a requirement parameter of each first sensing request, the sensing result corresponding to the second sensing request is determined based on the sensing result corresponding to the second sensing session and the requirement parameter of the second sensing request.

38. The method of any one of claim 26 and claims 32 to 37, wherein a type parameter comprises at least one of: a sensing scenario, a sensing area, a sensing target, a sensing method, a sensing service type, and a sensing service level.

39. The method of any one of claim 27, 28, 31 and claims 35 to 37, wherein a requirement parameter comprises at least one of: a confidence level, an accuracy of positioning estimate, an accuracy of velocity estimate, a sensing resolution, a maximum sensing service latency, a refresh rate, a missed detection rate, and a false alarm rate.

40. The method of any one of claims 25 to 39, wherein the second functional entity is deployed in at least one of: an access and mobility management function (AMF), a network exposure function (NEF), a gateway mobile location center (GMLC), and a sensing function (SF).

41. A communication method, comprising:
receiving, by a sensing device, information of a first sensing task, wherein the first sensing task is related to a plurality of first sensing sessions.

42. The method of claim 41, wherein after receiving, by the sensing device, the information of the first sensing task, the method further comprises:
measuring, by the sensing device, sensing data, based on the information of the first sensing task, to obtain measurement data corresponding to the first sensing task; and sending, by the sensing device, the measurement data corresponding to the first sensing task.

43. The method of claim 41 or 42, wherein after receiving, by the sensing device, information of the first sensing task, the method further comprises:
receiving, by the sensing device, updated information of the first sensing task.

44. The method of claim 43, wherein after receiving, by the sensing device, the updated information of the first sensing task, the method further comprises:
measuring, by the sensing device, sensing data, based on the updated information of the first sensing task, to obtain measurement data corresponding to the first sensing task; and sending, by the sensing device, the measurement data corresponding to the first sensing task.

45. The method of any one of claims 41 to 44, wherein the sensing device comprises at least one of: a terminal, and an access network (AN) device.

46. A first functional entity, comprising:
a first communication unit, configured to send information of a first sensing task, wherein the first sensing task is related to a plurality of first sensing sessions.

47. The first functional entity of claim 46, wherein the information of the first sensing task comprises a measurement type parameter of the first sensing task, and the measurement type parameter of the first sensing task is a measurement type parameter shared by the plurality of first sensing sessions.

48. The first functional entity of claim 46 or 47, wherein the information of the first sensing task comprises a reporting requirement parameter of the first sensing task, and the reporting requirement parameter of the first sensing task is determined based on a reporting requirement parameter corresponding to each first sensing session in the plurality of first sensing sessions.

49. The first functional entity of claim 48, wherein the reporting requirement parameter of the first sensing task is a most stringent reporting requirement parameter in reporting requirement parameters each corresponding to one first sensing session.

50. The first functional entity of any one of claims 47 to 49, wherein the information of the first sensing task further comprises an identifier of the first sensing task.

51. The first functional entity of claim 50, further comprises a first processing unit configured to store a mapping relationship of the first sensing task, wherein the mapping relationship of the first sensing task comprises a mapping relationship between the identifier of the first sensing task and an identifier of each first sensing session in the plurality of first sensing sessions.

52. The first functional entity of any one of claims 46 to 51, wherein the first communication unit is configured to:
receive measurement data corresponding to the first sensing task; and
send a sensing result corresponding to each first sensing session in the plurality of first sensing sessions, wherein the sensing result corresponding to each first sensing session is determined based on the measurement data corresponding to the first sensing task and the reporting requirement parameter corresponding to each first sensing session.

53. The first functional entity of any one of claims 46 to 52, wherein
the first communication unit is configured to: receive information of each second sensing session in a plurality of second sensing sessions;
the first processing unit is configured to:
determine a parameter corresponding to each second sensing session, based on the information of each second sensing session in the plurality of second sensing sessions; and
determine the plurality of first sensing sessions, based on a plurality of second sensing sessions which correspond to a same sensing device and have a same measurement type parameter, in response to determining, based on the parameter corresponding to each second sensing session, that the plurality of second sensing sessions which correspond to the same sensing device and have the same measurement type parameter exist in the plurality of second sensing sessions.

54. The first functional entity of any one of claims 46 to 52, wherein
the first communication unit is configured to receive information of a second sensing session; and
the first processing unit is configured to:
determine a parameter corresponding to the second sensing session based on the information of the second sensing session; and
aggregate the second sensing session into the first sensing task, in response to the first processing unit determining, based on the parameter corresponding to the second sensing session, that the second sensing session corresponds to a sensing device and a measurement type parameter same as the first sensing task.

55. The first functional entity of claim 54, wherein the first processing unit is configured to:
obtain an updated mapping relationship of the first sensing task based on an identifier of the second sensing session, wherein the updated mapping relationship of the first sensing task comprises a mapping relationship between an identifier of the first sensing task, an identifier of each first sensing session in the plurality of first sensing sessions, and the identifier of the second sensing session.

56. The first functional entity of claim 55, wherein the first processing unit is configured to:
update information of the first sensing task, based on a reporting requirement parameter corresponding to the second sensing session, to obtain updated information of the first sensing task, in response to the reporting requirement parameter corresponding to the second sensing session being higher than that of the first sensing task.

57. The first functional entity of claim 56, wherein the first communication unit is configured to send the updated information of the first sensing task.

58. The first functional entity of any one of claims 55 to 57, wherein the first communication unit is configured to:
receive measurement data corresponding to the first sensing task; and
send a sensing result corresponding to each first sensing session in the plurality of first sensing sessions and a sensing result corresponding to the second sensing session; wherein the sensing result corresponding to each first sensing session is determined based on the measurement data corresponding to the first sensing task and a reporting requirement parameter corresponding to each first sensing session, and the sensing result corresponding to the second sensing session is determined based on the measurement data corresponding to the first sensing task and the reporting requirement parameter corresponding to the second sensing session.

59. The first functional entity of any one of claims 54 to 58, wherein the parameter corresponding to the second sensing session comprise at least one of: the identifier of the second sensing session, a sensing device corresponding to the second sensing session, a measurement type parameter corresponding to the second sensing session, and the reporting requirement parameter corresponding to the second sensing session.

60. The first functional entity of any one of claims 54 to 59, wherein a sensing device comprises at least one of: a terminal, and an access network (AN) device.

61. The first functional entity of any one of claims 54 to 60, wherein the second sensing session is related to a plurality of first sensing requests.

62. The first functional entity of claim 61, wherein information of the second sensing session comprises a type parameter of the second sensing session, and the type parameter of the second sensing session is a type parameter shared by the plurality of first sensing requests.

63. The first functional entity of claim 61 or 62, wherein the information of the second sensing session comprises a requirement parameter of the second sensing session, and the requirement parameter of the second sensing session is determined based on a requirement parameter of each first sensing request in the plurality of first sensing requests.

64. The first functional entity of any one of claims 61 to 63, wherein the information of the second sensing session comprises an identifier of the second sensing session.

65. The first functional entity of claim 62, wherein a type parameter comprises at least one of: a sensing scenario, a sensing area, a sensing target, a sensing method, a sensing service type, and a sensing service level.

66. The first functional entity of claim 63, wherein a requirement parameter comprises at least one of: a confidence level, an accuracy of positioning estimate, an accuracy of velocity estimate, a sensing resolution, a maximum sensing service latency, a refresh rate, a missed detection rate, and a false alarm rate.

67. The first functional entity of any one of claim 47 and claims 54 to 66, wherein a measurement type parameter comprises at least one of: a data type to be reported, and a reference signal used for measuring.

68. The first functional entity of any one of claims 48, 49, 52, 56, 58, and 59, wherein a reporting requirement parameter comprises at least one of: a reporting frequency, a reporting latency-requirement, a reporting reliability, a reporting packet-loss rate, and a reporting bandwidth.

69. The first functional entity of any one of claims 46 to 68, is deployed in a sensing function (SF).

70. A second functional entity, comprising:
a second communication entity, configured to send information of a second sensing session, wherein the second sensing session is related to a plurality of first sensing requests.

71. The second functional entity of claim 70, wherein the information of the second sensing session comprises a type parameter of the second sensing session, and the type parameter of the second sensing session is a type parameter shared by the plurality of first sensing requests.

72. The second functional entity of claim 70 or 71, wherein the information of the second sensing session comprises a requirement parameter of the second sensing session, and the requirement parameter of the second sensing session is determined based on a requirement parameter of each first sensing request in the plurality of first sensing requests.

73. The second functional entity of claim 72, wherein the requirement parameter of the second sensing session is a most stringent requirement parameter in requirement parameters each corresponding to one first sensing request.

74. The second functional entity of any one of claims 71 to 73, wherein the information of the second sensing session comprises an identifier of the second sensing session.

75. The second functional entity of claim 74, further comprises a second processing unit configured to store a mapping relationship of the second sensing session, wherein the mapping relationship of the second sensing session comprises a mapping relationship between the identifier of the second sensing session and an identifier of each first sensing request in the plurality of first sensing requests.

76. The second functional entity of any one of claims 70 to 75, wherein
the second communication unit is configured to receive a sensing result corresponding to the second sensing session; and
the second communication unit is configured to send a sensing result corresponding to each first sensing request in the plurality of first sensing requests, wherein the sensing result corresponding to each first sensing request is determined based on the sensing result corresponding to the second sensing session and the requirement parameter of each first sensing request.

77. The second functional entity of any one of claims 70 to 76, wherein the second communication unit is configured to:
receive information of each second sensing request in a plurality of second sensing requests; and
determine the plurality of first sensing requests based on a plurality of second sensing requests with a same type parameter, in response to the second processing unit determining, based on the information of each second sensing request, that the plurality of second sensing requests with the same type parameter exist in the plurality of second sensing requests.

78. The second functional entity of any one of claims 70 to 76, wherein
the second communication unit is configured to receive information of the second sensing request; and
the second processing unit is configured to aggregate the second sensing request into the second sensing session, in response to the second processing unit determining, based on the information of the second sensing request, that a type parameter of the second sensing request is the same as that of the second sensing session.

79. The second functional entity of claim 78, wherein the second processing unit is configured to:
obtain an updated mapping relationship of the second sensing session based on an identifier of the second sensing request, wherein the updated mapping relationship of the second sensing session comprises a mapping relationship between an identifier of the second sensing session, an identifier of each first sensing request in the plurality of first sensing requests, and the identifier of the second sensing request.

80. The second functional entity of claim 79, wherein the second processing unit is configured to:
update information of the second sensing session based on a requirement parameter of the second sensing request to obtain updated information of the second sensing session, in response to the second processing unit determining, based on information of the second sensing request, that the requirement parameter of the second sensing request is higher than that of the second sensing session.

81. The second functional entity of claim 80, wherein the second communication unit is configured to send the updated information of the second sensing session.

82. The second functional entity of any one of claims 78 to 81, wherein the second communication unit is configured to:
receive a sensing result corresponding to the second sensing session; and
send a sensing result corresponding to each first sensing request in a plurality of first sensing requests and a sensing result corresponding to the second sensing request, wherein the sensing result corresponding to each first sensing request is determined based on the sensing result corresponding to the second sensing session and a requirement parameter of each first sensing request, and the sensing result corresponding to the second sensing request is determined based on the sensing result corresponding to the second sensing session and the requirement parameter of the second sensing request.

83. The second functional entity of any one of claim 71 and claims 77 to 82, wherein a type parameter comprises at least one of: a sensing scenario, a sensing area, a sensing target, a sensing method, a sensing service type, and a sensing service level.

84. The second functional entity of any one of claim 72, 73, 76 and claims 80 to 82, wherein a requirement parameter comprises at least one of: a confidence level, an accuracy of positioning estimate, an accuracy of velocity estimate, a sensing resolution, a maximum sensing service latency, a refresh rate, a missed detection rate, and a false alarm rate.

85. The second functional entity of any one of claims 70 to 84, wherein the second functional entity is deployed in at least one of: an access and mobility management function (AMF), a network exposure function (NEF), a gateway mobile location center (GMLC), and a sensing function (SF).

86. A sensing device, comprising:
a third communication unit, configured to receive information of a first sensing task, wherein the first sensing task is related to a plurality of first sensing sessions.

87. The sensing device of claim 86, further comprises a third processing unit, wherein
the third processing unit is configured to measure sensing data based on the information of the first sensing task, to obtain measurement data corresponding to the first sensing task; and
the third communication unit is configured to send the measurement data corresponding to the first sensing task.

88. The sensing device of claim 86 or 87, wherein the third communication unit is configured to receive updated information of the first sensing task.

89. The sensing device of claim 88, wherein
the third processing unit is configured to measure sensing data, based on the updated information of the first sensing task, to obtain measurement data corresponding to the first sensing task; and
the third communication unit is configured to send the measurement data corresponding to the first sensing task.

90. The sensing device of any one of claims 86 to 89, wherein the sensing device comprises at least one of: a terminal and an access network (AN) device.

91. A first functional entity, comprising a transceiver, a processor, and a memory, wherein the memory is configured to store computer programs, the transceiver is configured to communicate with other devices, and the processor is configured to invoke and execute computer programs stored in a memory, to cause the first functional entity to perform the method of any of claims 1 to 24.

92. A second functional entity, comprising a transceiver, a processor, and a memory, wherein the memory is configured to store computer programs, the transceiver is configured to communicate with other devices, and the processor is configured to invoke and execute computer programs stored in a memory, to cause the second functional entity to perform the method of any of claims 25 to 40.

93. A sensing device comprising a transceiver, a processor, and a memory, wherein the memory is configured to store computer programs, the transceiver is configured to communicate with other devices, and the processor is configured to invoke and execute computer programs stored in a memory, to cause the sensing device to perform the method of any of claims 41 to 45.

94. A chip comprising a processor configured to invoke and execute computer programs stored in a memory, to cause a device equipped with the chip to perform the method of any of claims 1 to 24, or claims 25 to 40, or claims 41 to 45.

95. A computer-readable storage medium configured to store computer programs, wherein the computer programs, when executed by a computer, are operable with the computer to perform the method of any of claims 1 to 24, or claims 25 to 40, or claims 41 to 45.

96. A computer program product comprising computer program instructions which are operable with a computer to perform the method of any of claims 1 to 24, or claims 25 to 40, or claims 41 to 45.

97. A computer program, wherein when executed by a computer, is operable with the computer to perform the method of any of claims 1 to 24, or claims 25 to 40, or claims 41 to 45.
